(19) Europäisches Patentamt
European Patent Office
Office européen des brevets

(11) EP 3 565 128 A1

(12) **EUROPEAN PATENT APPLICATION**
published in accordance with Art. 153(4) EPC

(43) Date of publication:
**06.11.2019 Bulletin 2019/45**

(21) Application number: **17893705.8**

(22) Date of filing: **25.01.2017**

(51) Int Cl.:
***H04B 1/40*** *(2015.01)* ***H04B 7/04*** *(2017.01)*

(86) International application number:
**PCT/CN2017/072650**

(87) International publication number:
**WO 2018/137183 (02.08.2018 Gazette 2018/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Huawei Technologies Co., Ltd.**
**Longgang District**
**Shenzhen, Guangdong 518129 (CN)**

(72) Inventors:
- **LOU, Yannian**
**Shenzhen**
**Guangdong 518129 (CN)**
- **XIAO, Weihong**
**Shenzhen**
**Guangdong 518129 (CN)**
- **MA, Ni**
**Shenzhen**
**Guangdong 518129 (CN)**
- **YANG, Jing**
**Shenzhen**
**Guangdong 518129 (CN)**

(74) Representative: **Epping - Hermann - Fischer**
**Patentanwaltsgesellschaft mbH**
**Schloßschmidstraße 5**
**80639 München (DE)**

# (54) BEAM GENERATION METHOD AND BASE STATION

(57) This application discloses a beam generation method and a base station, to resolve prior-art problems that a quantity of columns of antennas is increased and communications beam quality is deteriorated when a beam is expanded from 2T to 4T. For a feature that it is more sensitive to an antenna width during antenna panel deployment, in this application, planar array antennas are stacked vertically, to form two half planes, and element weighting is independently performed on each half plane. A signal generated by using a baseband may be mapped to an upper-half planar antenna array of a planar array antenna, or mapped to a lower-half planar antenna array of a planar array antenna, or mapped to both an upper-half planar antenna array of a planar array antenna and a lower-half planar antenna array of the planar array antenna, to form a beam, so that a quantity of logical channels to which a plurality of signals generated by using the baseband can be mapped is doubled. Therefore, on the premise that a quantity of columns of antennas is not increased, a beam can be expanded, for example, expanded from 2T to 4T, and communications beam quality is not affected because an antenna width in a half plane is not reduced.

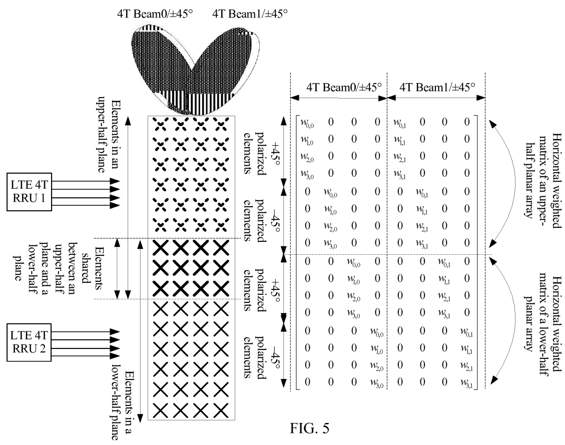


FIG. 5

EP 3 565 128 A1

## Description

### TECHNICAL FIELD

This application relates to the field of mobile communications technologies, and in particular, to a beam generation method and a base station.

### BACKGROUND

Beam domain communications means that signals on different elements of a linear array antenna or a planar array antenna are weighted, to form beams by using an interference principle, so that the signals are enhanced in a specified direction, and are weakened in another direction. In this way, users in different directions can perform spatial multiplexing, thereby improving a system capacity.

FIG. 1 is a schematic principle diagram of beam communications. A signal of an RRU 1 is weighted by using weights $\begin{bmatrix} w_{0,0} \\ w_{1,0} \\ w_{2,0} \\ w_{3,0} \end{bmatrix}$, to form a beam beam0, and a signal of an RRU 2 is weighted by using weights $\begin{bmatrix} w_{0,1} \\ w_{1,1} \\ w_{2,1} \\ w_{3,1} \end{bmatrix}$, to form a beam beam1. Directions of the two beams are different. Therefore, two users can perform spatial multiplexing. A weighting process may be written in a form of a matrix $\begin{bmatrix} w_{0,0} & w_{0,1} \\ w_{1,0} & w_{1,1} \\ w_{2,0} & w_{2,1} \\ w_{3,0} & w_{3,1} \end{bmatrix}$, where each column indicates a beam obtained after weighting by using weights, and corresponds to one transmit logical channel (indicated as 1T subsequently), and each row indicates an actual physical antenna element in a horizontal direction. In consideration of a dual-polarized antenna, a weight may be weighted to each of a +45° polarized antenna and a -45° polarized antenna, and the two beams have same coverage and may be considered as a 2T beam.

In a conventional weighting method, only a beam of a maximum of 2T can be generated. Therefore, when a terminal is a 4-receive antenna terminal (indicated as a 4R terminal subsequently), 4x4 multiple-input multiple-output (Multiple-Input Multiple-Output, MIMO) transmission cannot be performed, limiting performance of the 4R terminal in the beam domain communications. In addition, because of limitations of antenna deployment space, a wideband supporting requirement, installation costs, and the like, only a relatively small quantity of columns of antennas (for example, four columns of antennas) can be used in an actual system, and support for 4x4 MIMO transmission cannot be improved by increasing a quantity of columns.

To form a 4T beam, the prior art provides the following two solutions:

For a first implementation in prior art, refer to FIG. 2. FIG. 2 is a schematic diagram of a planar array antenna array and a weighted matrix in a horizontal direction in prior art 1. In a solution in prior art 1, four columns of dual-polarized antennas are used to form two horizontal beams, and each beam includes 4T channels, to obtain an 8T8R solution. The weighted matrix in the horizontal direction in the solution is shown in FIG. 2, 4T logical channels in one beam use same weights to ensure same coverage, and the weights are respectively weighted to a +45° polarized array and a -45° polarized array. Co-polarized 2T logical channels are generated by weighting same weights to a same group of elements.

A disadvantage in prior art 1 is as follows: Co-polarized 2T logical channels have a correlation of 1, and cannot be distinguished from each other, and only a formal 4T beam is formed and can only be used as a 2T beam actually.

For a second implementation, refer to FIG. 3. FIG. 3 is a schematic diagram of a planar array antenna array and a weighted matrix in a horizontal direction in prior art 2. The prior art 2 is expansion of the first implementation in prior art, in which a quantity of columns is increased to resolve a problem that a correlation between co-polarized logical channels in a beam is 1, and a specific solution is shown in FIG. 3. Compared with that in the technical solution 1, antennas are increased to six columns in the solution, and the columns are grouped into two groups: a group including three columns in a left-half plane, and a group including three columns in a right-half plane. Horizontal weighting is performed on every three columns of antennas, and the weighted matrix is shown in FIG. 3. In this way, 4T logical channels in one beam still use same weights, and the weights are respectively weighted to a +45° left-half planar polarized array, a +45° right-half planar polarized array, a -45° left-half planar polarized array, and a -45° left-half planar polarized array, to form a beam of co-coverage 4T. The same weighted matrix is used by the logical channels in the beam, but is weighted to different elements. Therefore, logical antennas have a correlation less than 1, can be distinguished from each other, and can be used as an actual 4T beam.

The prior art 2 mainly includes two disadvantages: One is a significant increase in an antenna width, and the other is deterioration of beam quality. Because antennas are increased from four columns to six columns, an antenna width is significantly increased. In an example of a 2.6 GHz frequency band, an array width of four columns of antennas is 231 mm, and an antenna width can be usually controlled within 330 mm after a housing is added, while an array width of six columns of antennas is 346 mm, and an antenna width can be usually controlled within 440 mm after a housing is added. Due to an increase in the antenna width, wind resistance increases, and a mechanical part has a higher strength requirement. This is disadvantageous for popularization. The deterioration of the beam quality is caused by a decrease in a quantity of elements forming a beam and a decrease in an equivalent aperture. Because the antennas are grouped into left and right groups, and each logical antenna is weighted by using only three columns of antennas, the quantity of elements and the equivalent aperture are decreased, leading to the deterioration of the beam quality.

In conclusion, in the solutions provided in the prior art, when a beam is expanded from 2T to 4T, a quantity of columns of antennas is increased and communications beam quality is deteriorated.

## SUMMARY

This application provides a beam generation method and a base station, to resolve prior-art problems that a quantity of columns of antennas is increased and communications beam quality is deteriorated when a beam is expanded from 2T to 4T.

According to a first aspect, this application provides a beam generation method. The method includes:

generating, by a base station, a signal by using a baseband; and

weighting, by the base station, the signal based on weights, and then mapping the signal to an upper-half planar antenna array of a planar array antenna, and/or mapping the signal to a lower-half planar antenna array of a planar array antenna, to form a beam.

For a feature that it is more sensitive to an antenna width during antenna panel deployment, in this application, planar array antennas are stacked vertically, to form two half planes, and element weighting is independently performed on each half plane. A signal generated by using the baseband may be mapped to the upper-half planar antenna array of the planar array antenna, or mapped to the lower-half planar antenna array of the planar array antenna, or mapped to both the upper-half planar antenna array of the planar array antenna and the lower-half planar antenna array of the planar array antenna, to form the beam, so that a quantity of logical channels to which a plurality of signals generated by using the baseband can be mapped is doubled. Therefore, on the premise that a quantity of columns of antennas is not increased, a beam can be expanded, for example, expanded from 2T to 4T, actual deployment difficulty can be reduced, and communications beam quality is not affected because an antenna width in a half plane is not reduced.

With reference to the first aspect, in a first possible implementation of the first aspect, the upper-half planar antenna array and the lower-half planar antenna array share N rows of antenna elements, where N is an integer greater than 1.

In this embodiment of this application, the upper-half planar antenna array and the lower-half planar antenna array share some antenna elements, so that antenna deployment difficulty can be reduced, and engineering implementation can be facilitated.

With reference to the first possible implementation of the first aspect, in a second possible implementation of the first aspect, each of the N rows of antenna arrays includes one or more antenna elements belonging to the upper-half planar antenna array and one or more antenna elements belonging to the lower-half planar antenna array; or two adjacent rows of antenna elements in the N rows of antenna elements respectively belong to the upper-half planar antenna array and the lower-half planar antenna array.

In this embodiment of this application, the upper-half plane and the lower-half plane share the N shared rows of antenna elements in a staggered manner, so that a loss of an antenna gain can be reduced.

With reference to the first or the second possible implementation of the first aspect, in a third possible implementation of the first aspect, a vertical spacing between any two adjacent rows of antenna elements in the N shared rows of antenna elements is less than a vertical spacing between any two adjacent rows of elements in non-shared antenna elements in the planar array antenna array, and a horizontal spacing between any two adjacent columns of antenna elements in the N shared rows of antenna elements is equal to a horizontal spacing between any two adjacent columns of elements in the non-shared antenna elements in the planar array antenna array.

In this embodiment of this application, the vertical spacing between any two adjacent rows of antenna elements in the N shared rows of antenna elements is reduced, so that an entire antenna height can be reduced, thereby reducing deployment difficulty.

With reference to any one of the first to the third possible implementations of the first aspect, in a fourth possible implementation of the first aspect, the weighting, by the base station, the signal based on weights, and then mapping the signal to an upper-half planar antenna array of a planar array antenna, and/or mapping the signal to a lower-half planar antenna array of a planar array antenna, to form a beam includes:
weighting, by the base station, the signal based on the weights, and then mapping the signal to a +45° upper-half planar polarized antenna array or a -45° upper-half planar polarized antenna array of the planar array antenna, and/or mapping the signal to a +45° lower-half planar polarized antenna array or a -45° lower-half planar polarized antenna array of the planar array antenna.

In this embodiment of this application, a signal may be mapped to the ±45° upper-half planar or lower-half planar polarized antenna arrays of the planar array antenna, so that the base station can form four generated signals into four co-coverage beams, to form a co-coverage beam, thereby implementing 4T channels on a base station side; and a width of the planar array antenna is not increased, so that communications beam quality is not affected.

With reference to any one of the first aspect or the first to the third possible implementations of the first aspect, in a fifth possible implementation of the first aspect, the signal is output by an RRU in a first standard to a feeding network; and

the weighting, by the base station, the signal based on weights, and then mapping the signal to an upper-half planar antenna array of a planar array antenna, or mapping the signal to a lower-half planar antenna array of a planar array antenna, to form a beam includes:
weighting, by the base station, the signal based on one group of weights by using the feeding network, and then mapping the signal to the upper-half planar antenna array of the planar array antenna, or mapping the signal to the lower-half planar antenna array of the planar array antenna, to form the beam.

The first standard may be a Universal Mobile Telecommunications System (Universal Mobile Telecommunications System, UMTS), Long Term Evolution (Long Term Evolution, LTE), new radio (New Radio, NR), and another communication standard. A specific type of the first communication standard is not specifically limited in this embodiment of this application.

With reference to the fifth possible implementation of the first aspect, in a sixth possible implementation of the first aspect, the weighting, by the base station, the signal based on one group of weights by using the feeding network, and then mapping the signal to the upper-half planar antenna array of the planar array antenna, or mapping the signal to the lower-half planar antenna array of the planar array antenna, to form the beam includes
weighting, by the base station, the signal based on the group of weights by using the feeding network, and then mapping the signal to a +45° upper-half planar polarized antenna array or a -45° upper-half planar polarized antenna array of the planar array antenna, or mapping the signal to a +45° lower-half planar polarized antenna array or a -45° lower-half planar polarized antenna array of the planar array antenna, to form the beam.

With reference to any one of the first aspect or the first to the third possible implementations of the first aspect, in a seventh possible implementation of the first aspect, the signal is output by an RRU in a second standard to a power splitter to generate two signals and output the two signals to a feeding network; and
the weighting, by the base station, the signal based on weights, and then mapping the signal to an upper-half planar antenna array of a planar array antenna, and mapping the signal to a lower-half planar antenna array of a planar array antenna, to form a beam includes:
respectively weighting, by the base station, the two signals based on one group of weights by using the feeding network, and then respectively mapping the two signals to the upper-half planar antenna array of the planar array antenna and the lower-half planar antenna array of the planar array antenna, to form the beam.

The second standard may be a Universal Mobile Telecommunications System (Universal Mobile Telecommunications System, UMTS), Long Term Evolution (Long Term Evolution, LTE), new radio (New Radio, NR), and another communication standard. A specific type of the second communication standard is not specifically limited in this embodiment of this application. In this embodiment of this application, two signals are generated, by using the power splitter, from the signal output by the RRU in the second communication standard, and one beam is formed by using the two signals, so that the signals can be enhanced.

With reference to the seventh possible implementation of the first aspect, in an eighth possible implementation of the first aspect, the respectively weighting, by the base station, the two signals based on one group of weights by using the feeding network, and then respectively mapping the two signals to the upper-half planar antenna array of the planar array antenna and the lower-half planar antenna array of the planar array antenna, to form the beam includes:

respectively weighting, by the base station, the two signals based on the group of weights by using the feeding network, and then respectively mapping the two signals to a +45° upper-half planar polarized antenna array of the planar array antenna and a +45° lower-half planar polarized antenna array of the planar array antenna, to form the beam; or

respectively weighting, by the base station, the two signals based on the group of weights by using the feeding network, and then respectively mapping the two signals to a -45° upper-half planar polarized antenna array of the planar array antenna and a -45° lower-half planar polarized antenna array of the planar array antenna, to form the beam.

According to a second aspect, this application provides a base station. The base station includes:

a baseband unit, configured to generate a signal; and

a feeding network, configured to: weight the signal based on weights, and then map the signal to an upper-half planar antenna array of a planar array antenna, and/or map the signal to a lower-half planar antenna array of a planar array antenna, to form a beam.

For a feature that it is more sensitive to an antenna width during antenna panel deployment, in this application, planar array antennas are stacked vertically, to form two half planes, and element weighting is independently performed on each half plane. A signal generated by using the baseband may be mapped to the upper-half planar antenna array of the planar array antenna, or mapped to the lower-half planar antenna array of the planar array antenna, or mapped to both the upper-half planar antenna array of the planar array antenna and the lower-half planar antenna array of the planar array antenna, to form the beam, so that a quantity of logical channels to which a plurality of signals generated by using the baseband can be mapped is doubled. Therefore, on the premise that an antenna width in a half plane is not reduced, a beam can be expanded, for example, expanded from 2T to 4T. Because the antenna width in the half plane is not reduced (beam quality is not affected because the antenna width is not reduced after two half planes are obtained through division, while beam quality deteriorates in the solution 2 in the prior art because a width of each half plane is reduced after two half planes are obtained through division), communications beam quality is not affected.

With reference to the second aspect, in a second possible implementation of the second aspect, the upper-half planar antenna array and the lower-half planar antenna array share N rows of antenna elements, where N is an integer greater than 1.

In this embodiment of this application, the upper-half planar antenna array and the lower-half planar antenna array share some antenna elements, so that antenna deployment difficulty can be reduced, and engineering implementation can be facilitated.

With reference to the first possible implementation of the second aspect, in a second possible implementation of the second aspect, each of the N rows of antenna arrays includes one or more antenna elements belonging to the upper-half planar antenna array and one or more antenna elements belonging to the lower-half planar antenna array; or two adjacent rows of antenna elements in the N rows of antenna elements respectively belong to the upper-half planar antenna array and the lower-half planar antenna array.

In this embodiment of this application, the upper-half plane and the lower-half plane share the N shared rows of antenna elements in a staggered manner, so that a loss of an antenna gain can be reduced.

With reference to the first or the second possible implementation of the second aspect, in a third possible implementation of the second aspect, a vertical spacing between any two adjacent rows of antenna elements in the N shared rows of antenna elements is less than a vertical spacing between any two adjacent rows of elements in non-shared antenna elements in the planar array antenna array, and a horizontal spacing between any two adjacent columns of antenna elements in the N shared rows of antenna elements is equal to a horizontal spacing between any two adjacent columns of elements in the non-shared antenna elements in the planar array antenna array.

In this embodiment of this application, the vertical spacing between any two adjacent rows of antenna elements in the N shared rows of antenna elements is reduced, so that an entire antenna height can be reduced, thereby reducing deployment difficulty.

With reference to any one of the first to the third possible implementations of the second aspect, in a fourth possible implementation of the second aspect, the feeding network is specifically configured to:
weight the signal based on the weights, and then map the signal to a +45° upper-half planar polarized antenna array or a -45° upper-half planar polarized antenna array of the planar array antenna, and/or map the signal to a +45° lower-half planar polarized antenna array or a -45° lower-half planar polarized antenna array of the planar array antenna.

In this embodiment of this application, a signal may be mapped to the ±45° upper-half planar or lower-half planar polarized antenna arrays of the planar array antenna, so that the base station can form four generated signals into four co-coverage beams, to form a co-coverage beam, thereby implementing 4T channels on a base station side; and a width of a half plane of the planar array antenna is not reduced, so that communications beam quality is not affected.

With reference to any one of the second aspect or the first to the third possible implementations of the second aspect, in a fifth possible implementation of the second aspect, the signal is output by an RRU in a first standard to the feeding network; and
the feeding network is specifically configured to: weight the signal based on one group of weights, and then map the signal to the upper-half planar antenna array of the planar array antenna, or map the signal to the lower-half planar antenna array of the planar array antenna, to form the beam.

The first standard may be a Universal Mobile Telecommunications System (Universal Mobile Telecommunications System, UMTS), Long Term Evolution (Long Term Evolution, LTE), new radio (New Radio, NR), and another communication standard. A specific type of the first communication standard is not specifically limited in this embodiment of this application.

With reference to the fifth possible implementation of the second aspect, in a sixth possible implementation of the second aspect, the feeding network is specifically configured to: weight the signal based on the group of weights, and then map the signal to a +45° upper-half planar polarized antenna array or a -45° upper-half planar polarized antenna array of the planar array antenna, or map the signal to a +45° lower-half planar polarized antenna array or a -45° lower-half planar polarized antenna array of the planar array antenna, to form the beam.

With reference to any one of the second aspect or the first to the third possible implementations of the second aspect, in a seventh possible implementation of the second aspect, the signal is output by an RRU in a second standard to a power splitter to generate two signals and output the two signals to a feeding network; and
the feeding network is specifically configured to: respectively weight the two signals based on one group of weights, and then respectively map the two signals to the upper-half planar antenna array of the planar array antenna and the lower-half planar antenna array of the planar array antenna, to form the beam.

The second standard may be a Universal Mobile Telecommunications System (Universal Mobile Telecommunications System, UMTS), Long Term Evolution (Long Term Evolution, LTE), new radio (New Radio, NR), and another communication standard. A specific type of the second communication standard is not specifically limited in this embodiment of this application. In this embodiment of this application, two signals are generated, by using the power splitter, from the signal output by the RRU in the second communication standard, and one beam is formed by using the two signals, so that the signals can be enhanced.

With reference to the seventh possible implementation of the second aspect, in a second possible implementation of the second aspect, the feeding network is specifically configured to: respectively weight the two signals based on the group of weights, and then respectively map the two signals to a +45° upper-half planar polarized antenna array of the planar array antenna and a +45° lower-half planar polarized antenna array of the planar array antenna, to form the beam; or
respectively weight the two signals based on the group of weights, and then respectively map the two signals to a -45° upper-half planar polarized antenna array of the planar array antenna and a -45° lower-half planar polarized antenna array of the planar array antenna, to form the beam.

According to a third aspect, an embodiment of this application provides a computer-readable storage medium. The computer-readable storage medium stores a computer executable instruction, and a processor of a base station executes the computer executable instruction, so that the base station performs the steps performed by the base station in the foregoing beam generation method provided in the embodiments of this application, or the base station deploys functional units corresponding to the steps.

According to a fourth aspect, an embodiment of this application provides a computer program product. The computer program product includes a computer executable instruction, and the computer executable instruction is stored in a computer-readable storage medium. A processor of a base station may read the computer executable instruction from the computer-readable storage medium, and the processor executes the computer executable instruction, so that the base station performs the steps performed by the base station in the foregoing beam generation method provided in the embodiments of this application, or the base station deploys functional units corresponding to the steps.

## BRIEF DESCRIPTION OF DRAWINGS

FIG. 1 is a schematic principle diagram of beam communications;
FIG. 2 is a schematic diagram of a planar array antenna array and a weighted matrix in a horizontal direction in prior art 1;
FIG. 3 is a schematic diagram of a planar array antenna array and a weighted matrix in a horizontal direction in prior art 2;
FIG. 4 is a schematic diagram of a beam generation method according to an embodiment of this application;
FIG. 5 is a schematic diagram of a beam generation method according to Embodiment 1 of this application;
FIG. 6 is a schematic diagram of a correlation between logical antennas according to Embodiment 1 of this application;
FIG. 7 is a schematic diagram of an antenna gain at an antenna height of 2.6 meters in a vertical direction;

FIG. 8 is a schematic diagram of an antenna gain at an antenna height of 2 meters in a vertical direction;
FIG. 9 is a schematic diagram of shared elements according to this application;
FIG. 10 is a schematic diagram of an antenna gain in a vertical direction that corresponds to Embodiment 1 of an element sharing technology according to an embodiment of this application;
FIG. 11 is a schematic diagram of an antenna gain in a vertical direction that corresponds to Embodiment 2 of an element sharing technology according to an embodiment of this application;
FIG. 12 is a schematic diagram of shared antenna elements in an upper-half plane and a lower-half plane according to Embodiment 1 of this application;
FIG. 13 is a schematic diagram of a beam generation method according to Embodiment 2 of this application;
FIG. 14 is a schematic diagram of a beam generation method according to Embodiment 3 of this application;
FIG. 15 is a vertical plane directivity pattern during joint driving of two half planes according to Embodiment 3 of this application;
FIG. 16 is a schematic diagram of percentages of quantities of transport streams in solutions according to this application;
FIG. 17 is a schematic diagram of comparison between user transmission rates according to this application;
FIG. 18 is a schematic diagram of smooth evolution from a UMTS to LTE according to an embodiment of this application;
FIG. 19A and FIG. 19B are a schematic diagram of three beams in massive MIMO;
FIG. 20A and FIG. 20B are a schematic diagram of four beams in massive MIMO;
FIG. 21 shows a base station according to this application; and
FIG. 22 shows a base station according to this application.

## DESCRIPTION OF EMBODIMENTS

The embodiments of this application are applicable to 3G (third generation mobile communications system) such as a universal mobile telecommunications system (Universal Mobile Telecommunications System, UMTS), a 4G (fourth generation mobile communications system) evolved system such as an LTE (Long Term Evolution, long term evolution) system, a 5G (fifth generation mobile communications system) system such as an access network using a new radio access technology (new radio access technology, New RAT), and a communications network such as a CRAN (Cloud Radio Access Network, cloud radio access network).

In the embodiments of this application, the term "base station" includes but is not limited to a base station, a node, a base station controller, an access point (Access Point, AP), a macro station, a micro station, a small cell, a high-frequency station, a low-frequency station, a beam, a relay node, some functions of the base station, a CRAN unit, or interface devices of any other types that can work in a wireless environment. In addition, the "base station" includes but is not limited to a base station in a 3G system, a base station in a 4G system, or a base station in a 5G system.

The following describes a beam generation method provided in the embodiments of this application in detail with reference to the accompanying drawings.

FIG. 4 is a schematic diagram of a beam generation method according to an embodiment of this application. The method is performed by a base station, is applicable to a base station system having an antenna array, and includes the following steps:

Step 401: The base station generates a signal by using a baseband.
Step 402: The base station weights the signal based on weights, and then maps the signal to an upper-half planar antenna array of a planar array antenna, and/or maps the signal to a lower-half planar antenna array of a planar array antenna, to form a beam.

In step 401, the base station first generates a signal by using the baseband. Specifically, a plurality of signals are usually generated, for example, four, eight, or 16 signals are generated, and a quantity of generated signals is the same as a quantity of logical channels in the antenna array. That is, if four beams including four co-coverage logical channels are generated, the base station generates, by using the baseband, four signals respectively corresponding to the four logical channels. If two co-coverage beams are generated, and each co-coverage beam includes four logical channels, the base station generates, by using the baseband, eight signals respectively corresponding to the eight logical channels.

In step 402, the base station weights, by using the weights, each signal generated by the base station by using the baseband, and maps the signal to the upper-half planar antenna array of the planar array antenna, or maps the signal to the lower-half planar antenna array of the planar array antenna, or maps the signal to both the upper-half planar antenna array and the lower-half planar antenna array of the planar array antenna.

Compared with prior art 1 in the background, this embodiment of this application can implement an actual multi-channel beam, for example, a 4T-channel beam. Compared with that in prior art 2 in the background, a quantity of columns of antennas is not increased in this embodiment of this application, but instead, planar array antennas are stacked vertically, to form two half planes, and element weighting is independently performed on each half plane. A signal generated by using the baseband may be mapped to the upper-half planar antenna array of the planar array antenna, or mapped to the lower-half planar antenna array of the planar array antenna, or mapped to both the upper-half planar antenna array of the planar array antenna and the lower-half planar antenna array of the planar array antenna, to form the beam, so that a quantity of logical channels to which a plurality of signals generated by using the baseband can be mapped is doubled. Therefore, on the premise that a quantity of columns of antennas is not increased, a beam can be expanded, for example, expanded from 2T to 4T, actual deployment difficulty can be reduced, and communications beam quality is not affected because an antenna width in a half plane is not reduced.

The following describes the beam generation method provided in this embodiment of this application in detail with reference to specific embodiments.

**Embodiment 1**

FIG. 5 is a schematic diagram of a beam generation method according to Embodiment 1 of this application. A quantity of columns in a planar array antenna is 4, an upper-half plane of the planar array antenna includes six rows of antenna elements, a lower-half plane of the planar array antenna includes six rows of antenna elements, and three rows of antenna elements in the middle are shared between the upper-half plane and the lower-half plane. Certainly, in this embodiment of this application, an antenna element may not be shared between the upper-half plane and the lower-half plane, in other words, the upper-half plane and the lower-half plane each include some antenna elements and include no shared antenna element. Herein, only an example in which the upper-half plane and the lower-half plane include a shared antenna element is used for description.

In addition, each antenna element of the planar array antenna is a polarized antenna element, that is, includes a +45° antenna element and a -45° antenna element (certainly, the antenna element may not be a polarized antenna element, and in this embodiment of this application, a polarized antenna element is used as an example for description).

A base station generates eight signals by using a baseband, as shown in FIG. 5, and the eight signals are respectively output by two radio remote units (Radio Remote Unit, RRU). A communications standard for a first RRU is LTE, and a communications standard for a second RRU is LTE. The first RRU outputs four signals generated by using the baseband to a feeding network, and the feeding network weights the signals by using weights and then respectively maps the signals to a +45° antenna element and a -45° antenna element in the upper-half plane.

For ease of description, in this embodiment of this application, $[w_{0,0}, w_{1,0}, w_{2,0}, w_{3,0}]^T$ are referred to as a first group of weights, and $[w_{0,1}, w_{1,1}, w_{2,1}, w_{3,1}]^T$ are referred to as a second group of weights. In Embodiment 1 of this application,

the feeding network weights, by using the first group of weights, a first signal output by the first RRU, and then maps the signal to a +45° antenna array of an upper-half planar antenna array;
the feeding network weights, by using the first group of weights, a second signal output by the first RRU, and then maps the signal to a -45° antenna array of the upper-half planar antenna array;
the feeding network weights, by using the second group of weights, a third signal output by the first RRU, and then maps the signal to the +45° antenna array of the upper-half planar antenna array;
the feeding network weights, by using the second group of weights, a fourth signal output by the first RRU, and then maps the signal to the -45° antenna array of the upper-half planar antenna array;
the feeding network weights, by using the first group of weights, a first signal output by the second RRU, and then maps the signal to the +45° antenna array of the upper-half planar antenna array;
the feeding network weights, by using the first group of weights, a second signal output by the second RRU, and then maps the signal to the -45° antenna array of the upper-half planar antenna array;
the feeding network weights, by using the second group of weights, a third signal output by the second RRU, and then maps the signal to the +45° antenna array of the upper-half planar antenna array; and
the feeding network weights, by using the second group of weights, a fourth signal output by the second RRU, and then maps the signal to the -45° antenna array of the upper-half planar antenna array.

It can be learned from the foregoing weighting and mapping rule that, the first RRU is configured to drive antenna elements (including the +45° antenna array and the -45° antenna array) in the upper-half plane, and the second RRU is configured to drive antenna elements (including the +45° antenna array and the -45° antenna array) in the lower-half plane. The first two signals output by the first RRU and the first two signals output by the second RRU are weighted by using same weights (namely, the first group of weights), to form a beam including four co-coverage logical channels, namely, beam0 (indicating a beam 0) shown in FIG. 5. In other words, the beam 0 includes co-coverage beams generated from the four signals. The last two signals output by the second RRU and the last two signals output by the second RRU are weighted by using same weights (namely, the second group of weights), to form a beam including four co-coverage logical channels, namely, beam1 (indicating a beam 1) shown in FIG. 5. In other words, the beam 1 includes co-coverage beams generated from the four signals.

Therefore, for a feature that it is more sensitive to an antenna width during antenna panel deployment, in the solution in Embodiment 1 of this application, the planar array antenna is stacked vertically, to form two half planes, and element weighting is independently performed on each half plane in a horizontal direction and a vertical direction. A weighted matrix is shown in FIG. 5. In the figure, left and right beams that are marked by dot matrices are formed by weighting the elements in the upper-half plane, and left and right beams that are marked by vertical lines are formed by weighting the elements in the lower-half plane. In this way, four columns of antennas are still maintained. 4T logical channels in each co-coverage beam (namely, the beam 0 and the beam 1) are respectively weighted and transmitted by using a +45° upper-half planar polarized array, a -45° upper-half planar polarized array, a +45° lower-half planar polarized array, and a -45° lower-half planar polarized array. When logical channels use same weights, beams formed by weighting the logical channels have same coverage, and because the logical channels are weighted by using the different array elements, a correlation between the 4T logical channels is less than 1. In conclusion, a formed co-coverage beam may be used as a 4T beam, and has a capability of rank (rank)-3 and rank-4 transmission. 8T logical channels (each co-coverage beam is a 4T beam) may be generated by respectively driving elements in the upper-half plane and the lower-half plane by two 4T RRUs.

FIG. 6 is a schematic diagram of a correlation between logical antennas according to Embodiment 1 of this application. 1000 groups of physical channels are generated based on a WINNER plus channel model, an average correlation between weighted logical channels is evaluated, and a result is shown in FIG. 6, where an x axis indicates a logical channel number, a solid line indicates a correlation between a logical channel 1 and the logical channels, and a dashed line indicates a correlation between a logical channel 3 and the logical channels. It can be learned that, in the solution, only an autocorrelation of a logical antenna is 1, and a cross correlation between logical antennas is less than 1. Therefore, the logical antennas according to Embodiment 1 can be used as 4T logical antennas.

In addition, in this solution, a staggered sharing technology is further used for some arrays in an upper-half plane and a lower-half plane, to reduce a height obtained after antennas are stacked vertically, and maintain a particular antenna gain. Specific analysis is as follows:

If 1.3 m antennas are simply stacked vertically, a height is increased to 2.6 m. An excessive height makes it difficult to deploy the antennas. If the antenna height is reduced to 2 m by reducing elements, a decrease in an equivalent aperture causes a decrease in an antenna gain. FIG. 7 is a schematic diagram of an antenna gain at an antenna height of 2.6 meters in a vertical direction. The antenna gain of a 2.6-meter antenna in FIG. 7 is 19.262 dB. FIG. 8 is a schematic diagram of an antenna gain at an antenna height of 2 meters in a vertical direction. The antenna gain of a 2-meter antenna in FIG. 8 is 18.270 dB. Therefore, the antenna gain is reduced from 19.262 dB to 18.270 dB. To maximize an antenna aperture and maintain the antenna gain while maintaining the height of 2 m, an element sharing technology shown in FIG. 9 is used. Four rows of elements at a junction between half planes are replaced with six rows of elements having a smaller spacing. A spacing between elements is reduced from 0.78 time a wavelength to 0.52 time the wavelength, and then the upper-half plane and the lower-half plane use the elements in a staggered manner. In this way, an aperture of each half plane is still maintained at 1.3 m, thereby reducing a loss of the antenna gain. FIG. 10 and FIG. 11 are respectively vertical plane directivity patterns of antenna gains of antennas using the element sharing technology. FIG. 10 is a schematic diagram of an antenna gain in the vertical direction that corresponds to Embodiment 1 of the element sharing technology, and it can be learned that the antenna gain is 18.812 dB. FIG. 11 is a schematic diagram of an antenna gain in the vertical direction that corresponds to Embodiment 2 of the element sharing technology, and it can be learned that the antenna gain is 18.805 dB. The gains are slightly less than that of the 2.6 m antenna because of a loss of some elements, but are greater than that of the 2 m antenna of a same size.

For two improved implementations shown in FIG. 9, in Embodiment 1, each of N shared rows of antenna arrays includes an antenna element belonging to the upper-half planar antenna array and an antenna element belonging to the lower-half planar antenna array, and in Embodiment 2, two adjacent rows of antenna elements in the N rows of antenna elements respectively belong to the upper-half planar antenna array and the lower-half planar antenna array.

Optionally, elements in some arrays in the vertical direction are used in a staggered manner to be shared between the upper and lower planes, thereby reducing a height increased after the planar array antennas are vertically stacked, and minimizing a loss of the antenna gain. The following is included:

(a) A shared element part including several rows of elements exists between the upper-half plane and the lower-half plane;
(b) a vertical spacing in the shared element part is less than that in a non-shared element part, and a horizontal spacing in the shared element part maintains the same as that in the non-shared element part; and
(c) the upper-half plane and the lower-half plane use elements in the shared element part in a staggered manner, and a staggering rule satisfies:

(c1) in the shared element part, quantities of elements used in the upper-half plane and the lower-half plane are the same;
(c2) elements in the two half planes are arranged symmetrically about a horizontal axis of an array; and
(c3) elements in each half plane are arranged symmetrically about a vertical axis of an array.

Optionally, a distribution manner of the antenna elements shared between the upper-half plane and the lower-half plane is not limited. FIG. 12 is a schematic diagram of the antenna elements shared between the upper-half plane and the lower-half plane according to Embodiment 1 of this application. Certainly, FIG. 12 is merely used as an example for description. The elements are arranged and distributed based on an actual deployment requirement.
System performance evaluation is performed for the solution in Embodiment 1 of this application below, and is compared with system performance evaluation of prior art 1 and prior art 2, to describe technical effects brought about by the solution in Embodiment 1 of this application.

**Embodiment 2**

FIG. 13 is a schematic diagram of a beam generation method according to Embodiment 2 of this application. Two RRUs are respectively an RRU in a UMTS standard and an RRU in an LTE standard, and one UMTS 4T RRU is used to drive an upper-half plane (or a lower-half plane), and one LTE 4T RRU is used to drive the lower-half plane (or the upper-half plane), to respectively form a 4T UMTS cell and a 4T LTE cell. Each cell has four beams.
Another part is the same as Embodiment 1. For a distribution manner of planar array antennas, a manner of sharing antenna elements between the upper-half plane and the lower-half plane, a vertical distance and a horizontal distance between the antenna elements, and a correspondence between a signal of an RRU and a beam of a logical channel, refer to Embodiment 1. Details are not described herein again.

**Embodiment 3**

FIG. 14 is a schematic diagram of a beam generation method according to Embodiment 3 of this application. In a UMTS mode (that is, an RRU is in a UMTS standard), logical channels of a 4T UMTS RRU may respectively drive elements in an upper-half plane and a lower-half plane after passing through a power splitter, to form two horizontal beams, and each beam includes 2T logical channels, to form UMTS 6-sector. Compared with a gain obtained when a 4T UMTS RRU drives only a half plane, an additional array gain of 1.9 dB can be obtained when the upper-half plane and the lower-half plane are driven at the same time by using the power splitter. FIG. 15 is a vertical plane directivity pattern during joint driving of two half planes according to Embodiment 3 of this application. It can be learned that, compared with that during separate driving of a half plane, an additional array gain of 1.9 dB can be obtained when the upper-half plane and the lower-half plane are jointly driven.
In Embodiment 3, an RRU in a second standard (in Embodiment 3, the second standard is a UMTS standard, and certainly, may also be a standard such as LTE or NR) outputs a signal that is generated by using a baseband to the power splitter, to generate two signals, and outputs the two signals to a feeding network. A base station respectively weights the two signals based on one group of weights by using the feeding network, and then respectively maps the two signals to an upper-half planar antenna array of a planar array antenna and a lower-half planar antenna array of the planar array antenna, to form a beam. Specifically, the base station respectively weights the two signals based on the group of weights by using the feeding network, and then respectively maps the two signals to a +45° upper-half planar polarized antenna array of the planar array antenna and a +45° lower-half planar polarized antenna array of the planar array antenna, to form the beam; or
the base station respectively weights the two signals based on the group of weights by using the feeding network, and then respectively maps the two signals to a -45° upper-half planar polarized antenna array of the planar array antenna and a -45° lower-half planar polarized antenna array of the planar array antenna, to form the beam.
Referring to FIG. 14, for ease of description, in this embodiment of this application, $[w_{0,01}, w_{1,0}, w_{2,0}, w_{3,0}]^T$ are referred to as a first group of weights, and $[w_{0,1}, w_{1,1}, w_{2,1}, w_{3,1}]^T$ are referred to as a second group of weights. In Embodiment 3 of this application,

the UMTS RRU outputs a first signal that is generated by using the baseband to the power splitter, to generate two signals, and respectively maps the two signals to the +45° upper-half planar polarized antenna array and the +45° lower-half planar polarized antenna array by using the first group of weights, to form a first beam;
the UMTS RRU outputs a second signal that is generated by using the baseband to the power splitter, to generate two signals, and respectively maps the two signals to the -45° upper-half planar polarized antenna array and the

-45° lower-half planar polarized antenna array by using the first group of weights, to form a second beam;
the UMTS RRU outputs a third signal that is generated by using the baseband to the power splitter, to generate two signals, and respectively maps the two signals to the +45° upper-half planar polarized antenna array and the +45° lower-half planar polarized antenna array by using the second group of weights, to form a third beam; and
the UMTS RRU outputs a fourth signal that is generated by using the baseband to the power splitter, to generate two signals, and respectively maps the two signals to the -45° upper-half planar polarized antenna array and the -45° lower-half planar polarized antenna array by using the second group of weights, to form a beam.

The first beam and the second beam are co-coverage beams because the signals are weighted by using the same weights. Referring to FIG. 14, the first beam and the second beam of an antenna array have same coverage, and form beam0, and the third beam and the fourth beam of the antenna array have same coverage, and form beam1.
Beneficial effects of this embodiment of this application are as follows:

1. Planar array antennas are stacked vertically, and proper channel mapping is performed. A low-correlation 4T beam is formed on the premise that a quantity of columns of antennas is not increased, so that 4x4 MIMO transmission is supported in the beam. 2. A technology of sharing some arrays between the upper-half plane and the lower-half plane is used to reduce an antenna height, and reduce a loss of an antenna gain. 3. Through a proper antenna array design and channel mapping design, an antenna can be flexibly combined with an RRU, to implement smooth evolution from UMTS 6-sector to LTE 8T8R.

Specifically, Embodiment 1 is used as an example. The planar array antennas are stacked vertically to form two half planes, the half planes are mapped to different logical channels, and use same beamforming weights in a horizontal plane, to form a beam of co-coverage 4T, so that 4x4 MIMO transmission is supported in the beam. Specific mapping is shown in Table 1. Table 1 shows a mapping relationship between a logical channel, a beam weight, and an element.

**Table 1**

| Beam | Weight | Logical channel | Element | Form |
|---|---|---|---|---|
| Left beam | W1 | 1 | +45° upper-half plane | 4T logical channels are mapped to different elements and have same coverage |
| | W1 | 2 | +45° lower-half plane | |
| | W1 | 3 | -45° upper-half plane | |
| | W1 | 4 | -45° lower-half plane | |
| Right beam | W2 | 5 | +45° upper-half plane | 4T logical channels are mapped to different elements and have same coverage |
| | W2 | 6 | +45° lower-half plane | |
| | W2 | 7 | -45° upper-half plane | |
| | W2 | 8 | -45° lower-half plane | |

Compared with that in prior art 1, the 4T co-coverage logical channels in the beam are obtained by weighting different elements in this embodiment of this application. Therefore, when a user has four antennas, 4x4 MIMO transmission is supported, and a maximum of rank-4 transmission is supported, thereby improving peak experience of the user. Compared with that in prior art 2, four elements are weighted in a horizontal direction in this embodiment of this application, and beam quality is better. Therefore, better performance can be obtained. Performance of prior art 1, prior art 2, and Embodiment 1 in this technical solution is compared, as shown in FIG. 16 and FIG. 17. FIG. 16 shows percentages of quantities of transport streams in the solutions. FIG. 17 shows comparison between user transmission rates. It can be learned that the solution in Embodiment 1 of this application supports rank-3 and rank-4 transmission at a higher percentage, so that a multiplexing rate in Embodiment 1 of this application is higher and reaches 2.68, while multiplexing rates in prior art 1 and prior art 2 are respectively 1.92 and 2.49. Support for rank-3 and rank-4 transmission at a higher percentage is represented by a higher throughput of the user (a user having better channel quality and can perform rank-3 and rank-4 transmission) at 95% of a cumulative distribution function (cumulative distribution function, CDF) in FIG. 17. This indicates that Embodiment 1 of this application has an advantage in performance, and in particular, has a higher user peak transmission rate.

Certainly, herein, only Embodiment 1 of this application is used as an example for description. Similarly, another solution in this embodiment of this application (such as Embodiment 2 of this application and Embodiment 3 of this application) has a higher user peak transmission rate than that in prior art 1 and prior art 2. Details are not described herein again.

In addition, in this embodiment of this application, a technology of sharing elements between the upper-half plane and the lower-half plane is used. Therefore, compared with those of 2 m antennas that are simply stacked, a higher antenna gain is obtained at a same size, and coverage is enhanced; and compared with those of 2.6 m antennas that are simply stacked, an antenna size is reduced and a higher antenna gain is maintained, thereby reducing a coverage loss. Table 2 shows comparison of an antenna gain and an offline rate.

**Table 2**

| | 2.6 m antenna | 2.0 m antenna | Element sharing antenna in this application |
|---|---|---|---|
| Antenna gain (dB) | 19.262 | 18.270 | 18.812 |
| Offline rate | 1.54% | 1.94% | 1.62% |

It can be learned from Table 2 that, in this application, an antenna gain of the element sharing antenna is higher than an antenna gain of the 2-meter antenna, and an offline rate of the element sharing antenna is lower than an offline rate of the 2-meter antenna. In addition, deployment of the 2-meter antenna is used in this application, and is carried out easier compared with deployment of the 2.6-meter antenna.

It should be noted that, in this embodiment of this application, all parameters related to the planar array antenna are used as an example for description. During actual implementation, another planar array antenna parameter may be used. This is not specifically limited in this embodiment of this application.

With reference to the foregoing three embodiments, an RRU can be flexibly combined with an antenna, to implement smooth evolution from UMTS 6-sector to LTE 8T8R. FIG. 18 is a schematic diagram of smooth evolution from a UMTS to LTE according to an embodiment of this application. A specific implementation is as follows:

(A) When there is no LTE deployment requirement at an early stage, a 4T UMTS RRU may be used to respectively drive elements in the upper-half plane and the lower-half plane by using the power splitter, to form two horizontal beams and form UMTS 6-sector, as shown in (a) in FIG. 18.

(B) After there is an LTE deployment requirement, one group of 4T LTE RRUs may be directly added to drive elements in the lower-half plane, to form a two-beam LTE cell. In this case, a UMTS cell coexists with the LTE cell, as shown in (b) in FIG. 18.

(C) After an entire network is evolved to LTE, an original UMTS RRU may be replaced with an LTE RRU, to form a 4Tx2-Beam LTE cell, and two 4R terminals are supported in performing 4x4 MIMO transmission, as shown in (c) in FIG. 18.

In this embodiment of this application, smooth evolution from UMTS to LTE is supported: Four columns of dual-beam antennas may support a wideband of 1.8 G to 2.1 G through optimization. Therefore, in a process of evolving from UMTS 6-sector to LTE, only an RRU needs to be added or replaced, and an antenna panel does not need to be changed. Beamforming is completed at an antenna end, and no joint processing is performed between RRUs. Therefore, splicing of a plurality of 4T RRUs is supported, and channel correction only needs to reach the microsecond scale.

Embodiment 1 to Embodiment 3 are described by using two co-coverage beams as an example. During specific implementation, the embodiments are not limited to a case of two co-coverage beams, and the embodiments are further applicable to a case of more than two beams. For example, FIG. 19A and FIG. 19B are a schematic diagram of three beams in massive MIMO. The schematic diagram shows a 6-column (12T12R) 3-beam scenario. Three RRUs (a standard for each RRU is not limited, and may be any one of a 3G standard, a 4G standard, a 5G standard, or another standard) output a total of 12 signals to the feeding network, and the feeding network weights the signals by using three different groups of weights. A weighted matrix is shown in FIG. 19A and FIG. 19B, and a principle is similar to that in Embodiment 1. Details are not described herein again. For another example, FIG. 20A and FIG. 20B are a schematic diagram of four beams in massive MIMO. The schematic diagram shows an 8-column (16T16R) 4-beam scenario. Four RRUs (a standard for each RRU is not limited, and may be any one of a 3G standard, a 4G standard, a 5G standard, or another standard) output a total of 16 signals to the feeding network, and the feeding network weights the signals by using four different groups of weights. A weighted matrix is shown in FIG. 20A and FIG. 20B, and a principle is similar to that in Embodiment 1. Details are not described herein again.

Based on a same invention idea, an embodiment of this application provides a base station 2100. The base station 2100 is configured to perform the foregoing beam generation method, may be specifically configured to perform Embodiment 1 to Embodiment 3, and specifically includes:

a baseband unit 2101, configured to generate a signal; and
a feeding network unit 2102, configured to: weight the signal based on weights, and then map the signal to an upper-half planar antenna array of a planar array antenna, and/or map the signal to a lower-half planar antenna array of a planar array antenna, to form a beam.

Optionally, the upper-half planar antenna array and the lower-half planar antenna array share N rows of antenna elements, where N is an integer greater than 1.

Optionally, each of the N rows of antenna arrays includes one or more antenna elements belonging to the upper-half planar antenna array and one or more antenna elements belonging to the lower-half planar antenna array; or two adjacent rows of antenna elements in the N rows of antenna elements respectively belong to the upper-half planar antenna array and the lower-half planar antenna array.

Optionally, a vertical spacing between any two adjacent rows of antenna elements in the N shared rows of antenna elements is less than a vertical spacing between any two adjacent rows of elements in non-shared antenna elements in the planar array antenna array, and a horizontal spacing between any two adjacent columns of antenna elements in the N shared rows of antenna elements is equal to a horizontal spacing between any two adjacent columns of elements in the non-shared antenna elements in the planar array antenna array.

Optionally, the feeding network unit 2102 is specifically configured to: weight the signal based on the weights, and then map the signal to a +45° upper-half planar polarized antenna array or a -45° upper-half planar polarized antenna array of the planar array antenna, and/or map the signal to a +45° lower-half planar polarized antenna array or a -45° lower-half planar polarized antenna array of the planar array antenna.

Optionally, the signal is output by an RRU in a first standard to a feeding network; and the feeding network unit 2102 is specifically configured to: weight the signal based on one group of weights, and then map the signal to the upper-half planar antenna array of the planar array antenna, or map the signal to the lower-half planar antenna array of the planar array antenna, to form the beam.

Optionally, the feeding network unit 2102 is specifically configured to: weight the signal based on the group of weights, and then map the signal to a +45° upper-half planar polarized antenna array or a -45° upper-half planar polarized antenna array of the planar array antenna, or map the signal to a +45° lower-half planar polarized antenna array or a -45° lower-half planar polarized antenna array of the planar array antenna, to form the beam.

Optionally, the signal is output by an RRU in a second standard to a power splitter to generate two signals and output the two signals to a feeding network; and the feeding network unit 2102 is specifically configured to: respectively weight the two signals based on one group of weights, and then respectively map the two signals to the upper-half planar antenna array of the planar array antenna and the lower-half planar antenna array of the planar array antenna, to form the beam.

Optionally, the feeding network unit 2102 is specifically configured to: respectively weight the two signals based on the group of weights, and then respectively map the two signals to a +45° upper-half planar polarized antenna array of the planar array antenna and a +45° lower-half planar polarized antenna array of the planar array antenna, to form the beam; or respectively weight the two signals based on the group of weights, and then respectively map the two signals to a -45° upper-half planar polarized antenna array of the planar array antenna and a -45° lower-half planar polarized antenna array of the planar array antenna, to form the beam.

Based on a same invention idea, an embodiment of this application further provides a base station 2200. As shown in FIG. 22, the base station 2200 includes a processor 2201, a memory 2202, a transceiver 2203, and a baseband unit 2205. The processor 2201, the memory 2202, and the transceiver 2203 are connected to each other by using a bus 2204.

The memory 2202 is configured to store a computer executable instruction.

The processor 2201 is configured to execute the computer executable instruction stored in the memory 2202. The processor 2201 may be configured to implement a function implemented by the feeding network in any one of the beam generation methods in this application.

The baseband unit 2205 is configured to generate a signal.

The processor 2201 executes the computer executable instruction stored in the memory 2202, so that the base station 2200 performs the steps performed by the base station in the beam generation methods provided in the embodiments of this application, or the base station deploys functional units corresponding to the steps.

The memory 2202 may be any one or any combination of the following: a random access memory (Random Access Memory, RAM for short), a read-only memory (read only memory, ROM for short), a non-volatile memory (non-volatile memory, NVM for short), a solid state drive (Solid State Drives, SSD for short), a mechanical hard disk, a magnetic disk, a disk array, or another storage medium.

The transceiver 2203 is used by the base station 2200 to exchange data with another device. The base station may perform any one of the methods in Embodiment 1 to Embodiment 3, to implement the beam generation method. The base station exchanges data with a terminal by using the transceiver 2203. The transceiver 2203 may be any one or any combination of the following: a network interface (such as an Ethernet interface), a wireless network card, or another device having a network access function.

The bus 2204 may include an address bus, a data bus, a control bus, and the like. For ease of denotation, the bus is represented by using a thick line in FIG. 22. The bus 2204 may be any one or any combination of the following: an industry standard architecture (Industry Standard Architecture, ISA for short) bus, a peripheral component interconnect (Peripheral Component Interconnect, PCI for short) bus, an extended industry standard architecture (Extended Industry Standard Architecture, EISA for short) bus, or another device for wired data transmission.

An embodiment of this application provides a computer-readable storage medium. The computer-readable storage medium stores a computer executable instruction, and a processor of a base station executes the computer executable instruction, so that the base station performs the steps performed by the base station in the beam generation method provided in the embodiments of this application, or the base station deploys functional units corresponding to the steps.

An embodiment of this application provides a computer program product. The computer program product includes a computer executable instruction, and the computer executable instruction is stored in a computer-readable storage medium. A processor of a base station may read the computer executable instruction from the computer-readable storage medium, and the processor executes the computer executable instruction, so that the base station performs the steps performed by the base station in the beam generation method provided in the embodiments of this application, or the base station deploys functional units corresponding to the steps.

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the embodiments of this application without departing from the spirit and scope of the embodiments of this application. This application is intended to cover these modifications and variations provided that they fall within the scope of protection defined by the following claims and their equivalent technologies.

## Claims

1. A beam generation method, wherein the method comprises:

    generating, by a base station, a signal by using a baseband; and
    weighting, by the base station, the signal based on weights, and then mapping the signal to an upper-half planar antenna array of a planar array antenna, and/or mapping the signal to a lower-half planar antenna array of a planar array antenna, to form a beam.

2. The method according to claim 1, wherein the upper-half planar antenna array and the lower-half planar antenna array share N rows of antenna elements, wherein N is an integer greater than 1.

3. The method according to claim 2, wherein each of the N rows of antenna arrays comprises one or more antenna elements belonging to the upper-half planar antenna array and one or more antenna elements belonging to the lower-half planar antenna array; or
two adjacent rows of antenna elements in the N rows of antenna elements respectively belong to the upper-half planar antenna array and the lower-half planar antenna array.

4. The method according to claim 2 or 3, wherein a vertical spacing between any two adjacent rows of antenna elements in the N shared rows of antenna elements is less than a vertical spacing between any two adjacent rows of elements in non-shared antenna elements in the planar array antenna array, and a horizontal spacing between any two adjacent columns of antenna elements in the N shared rows of antenna elements is equal to a horizontal spacing between any two adjacent columns of elements in the non-shared antenna elements in the planar array antenna array.

5. The method according to any one of claims 1 to 4, wherein the weighting, by the base station, the signal based on weights, and then mapping the signal to an upper-half planar antenna array of a planar array antenna, and/or mapping the signal to a lower-half planar antenna array of a planar array antenna, to form a beam comprises:
weighting, by the base station, the signal based on the weights, and then mapping the signal to a +45° upper-half planar polarized antenna array or a -45° upper-half planar polarized antenna array of the planar array antenna, and/or mapping the signal to a +45° lower-half planar polarized antenna array or a -45° lower-half planar polarized antenna array of the planar array antenna.

6. The method according to any one of claims 1 to 4, wherein the signal is output by a radio remote unit RRU in a first standard to a feeding network; and
the weighting, by the base station, the signal based on weights, and then mapping the signal to an upper-half planar antenna array of a planar array antenna, or mapping the signal to a lower-half planar antenna array of a planar array antenna, to form a beam comprises:
weighting, by the base station, the signal based on one group of weights by using the feeding network, and then mapping the signal to the upper-half planar antenna array of the planar array antenna, or mapping the signal to the lower-half planar antenna array of the planar array antenna, to form the beam.

7. The method according to claim 6, wherein the weighting, by the base station, the signal based on one group of weights by using the feeding network, and then mapping the signal to the upper-half planar antenna array of the planar array antenna, or mapping the signal to the lower-half planar antenna array of the planar array antenna, to form the beam comprises:
weighting, by the base station, the signal based on the group of weights by using the feeding network, and then mapping the signal to a +45° upper-half planar polarized antenna array or a -45° upper-half planar polarized antenna array of the planar array antenna, or mapping the signal to a +45° lower-half planar polarized antenna array or a -45° lower-half planar polarized antenna array of the planar array antenna, to form the beam.

**8.** The method according to any one of claims 1 to 4, wherein the signal is output by an RRU in a second standard to a power splitter to generate two signals and output the two signals to a feeding network; and
the weighting, by the base station, the signal based on weights, and then mapping the signal to an upper-half planar antenna array of a planar array antenna, and mapping the signal to a lower-half planar antenna array of a planar array antenna, to form a beam comprises:
respectively weighting, by the base station, the two signals based on one group of weights by using the feeding network, and then respectively mapping the two signals to the upper-half planar antenna array of the planar array antenna and the lower-half planar antenna array of the planar array antenna, to form the beam.

**9.** The method according to claim 8, wherein the respectively weighting, by the base station, the two signals based on one group of weights by using the feeding network, and then respectively mapping the two signals to the upper-half planar antenna array of the planar array antenna and the lower-half planar antenna array of the planar array antenna, to form the beam comprises:

respectively weighting, by the base station, the two signals based on the group of weights by using the feeding network, and then respectively mapping the two signals to a +45° upper-half planar polarized antenna array of the planar array antenna and a +45° lower-half planar polarized antenna array of the planar array antenna, to form the beam; or
respectively weighting, by the base station, the two signals based on the group of weights by using the feeding network, and then respectively mapping the two signals to a -45° upper-half planar polarized antenna array of the planar array antenna and a -45° lower-half planar polarized antenna array of the planar array antenna, to form the beam.

**10.** Abase station, wherein the base station comprises:

a baseband unit, configured to generate a signal; and
a feeding network, configured to: weight the signal based on weights, and then map the signal to an upper-half planar antenna array of a planar array antenna, and/or map the signal to a lower-half planar antenna array of a planar array antenna, to form a beam.

**11.** The base station according to claim 10, wherein the upper-half planar antenna array and the lower-half planar antenna array share N rows of antenna elements, wherein N is an integer greater than 1.

**12.** The base station according to claim 11, wherein each of the N rows of antenna arrays comprises one or more antenna elements belonging to the upper-half planar antenna array and one or more antenna elements belonging to the lower-half planar antenna array; or
two adjacent rows of antenna elements in the N rows of antenna elements respectively belong to the upper-half planar antenna array and the lower-half planar antenna array.

**13.** The base station according to claim 11 or 12, wherein a vertical spacing between any two adjacent rows of antenna elements in the N shared rows of antenna elements is less than a vertical spacing between any two adjacent rows of elements in non-shared antenna elements in the planar array antenna array, and a horizontal spacing between any two adjacent columns of antenna elements in the N shared rows of antenna elements is equal to a horizontal spacing between any two adjacent columns of elements in the non-shared antenna elements in the planar array antenna array.

**14.** The base station according to any one of claims 10 to 13, wherein the feeding network is specifically configured to: weight the signal based on the weights, and then map the signal to a +45° upper-half planar polarized antenna array or a -45° upper-half planar polarized antenna array of the planar array antenna, and/or map the signal to a +45° lower-half planar polarized antenna array or a -45° lower-half planar polarized antenna array of the planar array antenna.

**15.** The base station according to any one of claims 10 to 13, wherein the signal is output by an RRU in a first standard to the feeding network; and
the feeding network is specifically configured to: weight the signal based on one group of weights, and then map the signal to the upper-half planar antenna array of the planar array antenna, or map the signal to the lower-half planar antenna array of the planar array antenna, to form the beam.

**16.** The base station according to claim 15, wherein the feeding network is specifically configured to: weight the signal based on the group of weights, and then map the signal to a +45° upper-half planar polarized antenna array or a -45° upper-half planar polarized antenna array of the planar array antenna, or map the signal to a +45° lower-half planar polarized antenna array or a -45° lower-half planar polarized antenna array of the planar array antenna, to form the beam.

**17.** The base station according to any one of claims 10 to 13, wherein the signal is output by an RRU in a second standard to a power splitter to generate two signals and output the two signals to the feeding network; and
the feeding network is specifically configured to: respectively weight the two signals based on one group of weights, and then respectively map the two signals to the upper-half planar antenna array of the planar array antenna and the lower-half planar antenna array of the planar array antenna, to form the beam.

**18.** The base station according to claim 17, wherein the feeding network is specifically configured to: respectively weight the two signals based on the group of weights, and then respectively map the two signals to a +45° upper-half planar polarized antenna array of the planar array antenna and a +45° lower-half planar polarized antenna array of the planar array antenna, to form the beam; or
respectively weight the two signals based on the group of weights, and respectively then map the two signals to a -45° upper-half planar polarized antenna array of the planar array antenna and a -45° lower-half planar polarized antenna array of the planar array antenna, to form the beam.

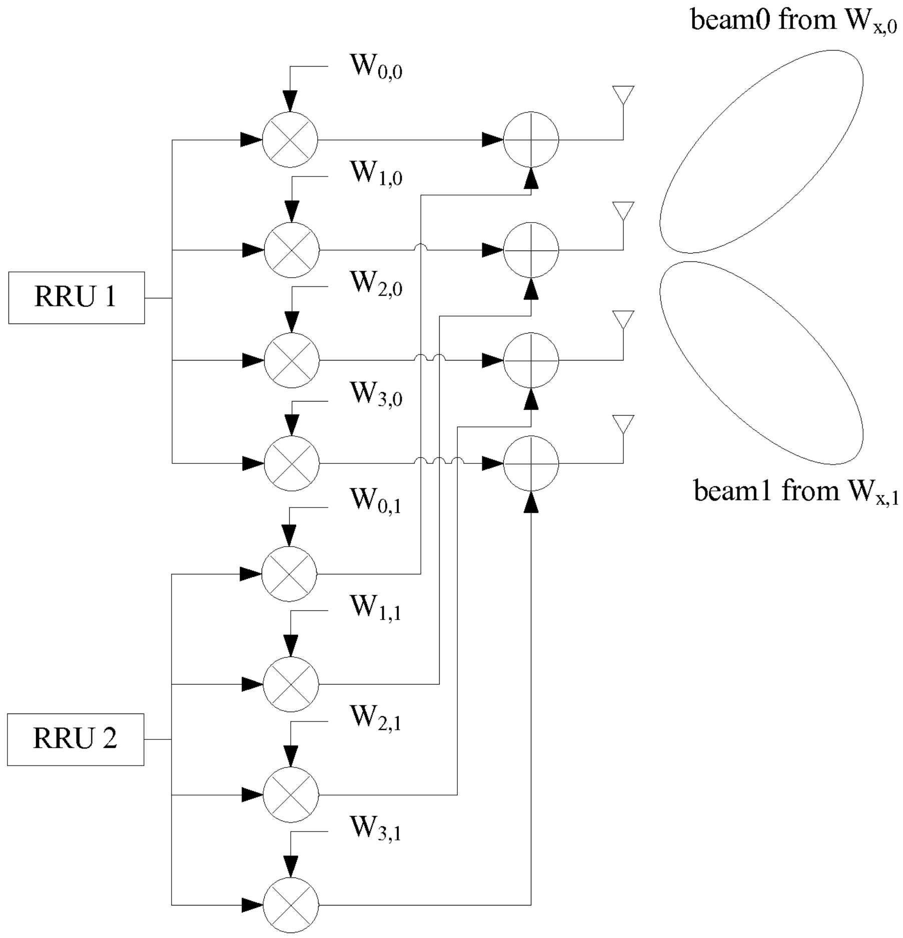
beam0 from $W_{x,0}$
$W_{0,0}$
$W_{1,0}$
$W_{2,0}$
$W_{3,0}$
RRU 1
beam1 from $W_{x,1}$
$W_{0,1}$
$W_{1,1}$
$W_{2,1}$
$W_{3,1}$
RRU 2

FIG. 1

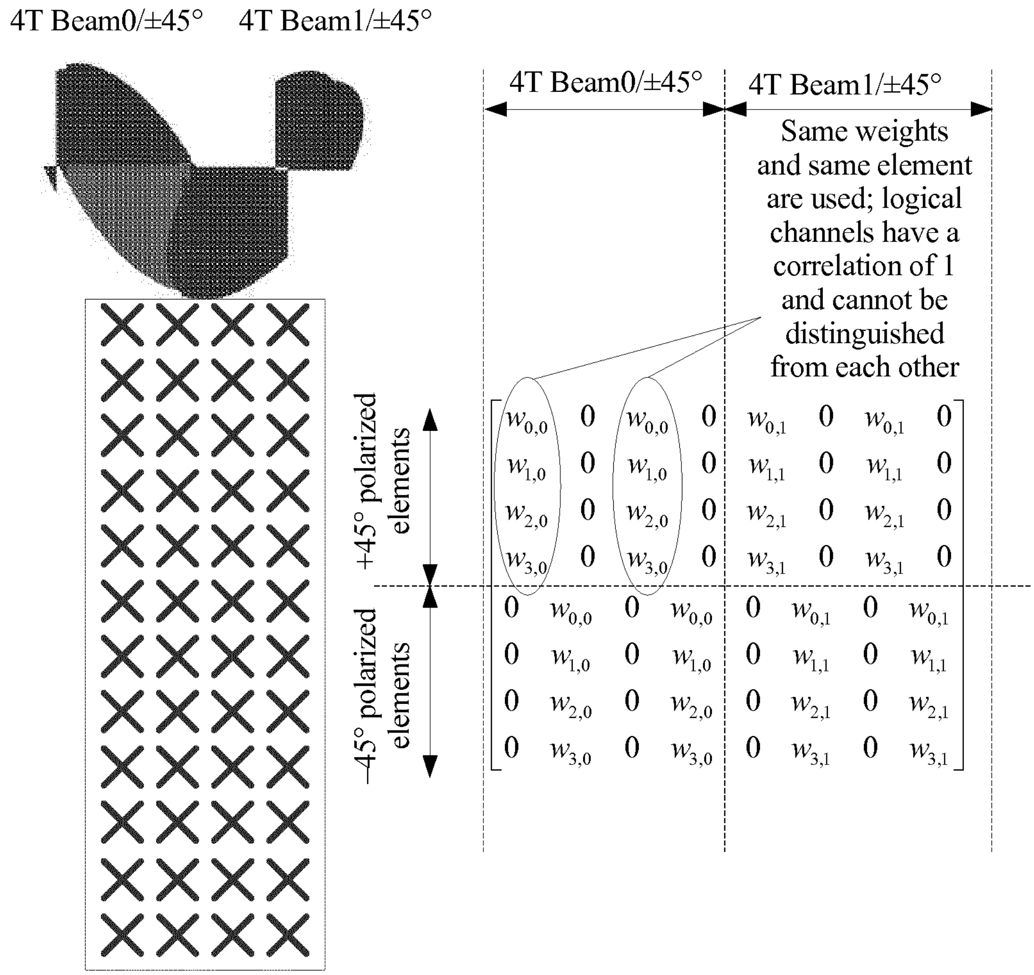
4T Beam0/±45°
4T Beam1/±45°
4T Beam0/±45°
4T Beam1/±45°
Same weights and same element are used; logical channels have a correlation of 1 and cannot be distinguished from each other
+45° polarized elements
−45° polarized elements
$w_{0,0}$ 0 $w_{0,0}$ 0 $w_{0,1}$ 0 $w_{0,1}$ 0
$w_{1,0}$ 0 $w_{1,0}$ 0 $w_{1,1}$ 0 $w_{1,1}$ 0
$w_{2,0}$ 0 $w_{2,0}$ 0 $w_{2,1}$ 0 $w_{2,1}$ 0
$w_{3,0}$ 0 $w_{3,0}$ 0 $w_{3,1}$ 0 $w_{3,1}$ 0
0 $w_{0,0}$ 0 $w_{0,0}$ 0 $w_{0,1}$ 0 $w_{0,1}$
0 $w_{1,0}$ 0 $w_{1,0}$ 0 $w_{1,1}$ 0 $w_{1,1}$
0 $w_{2,0}$ 0 $w_{2,0}$ 0 $w_{2,1}$ 0 $w_{2,1}$
0 $w_{3,0}$ 0 $w_{3,0}$ 0 $w_{3,1}$ 0 $w_{3,1}$

FIG. 2

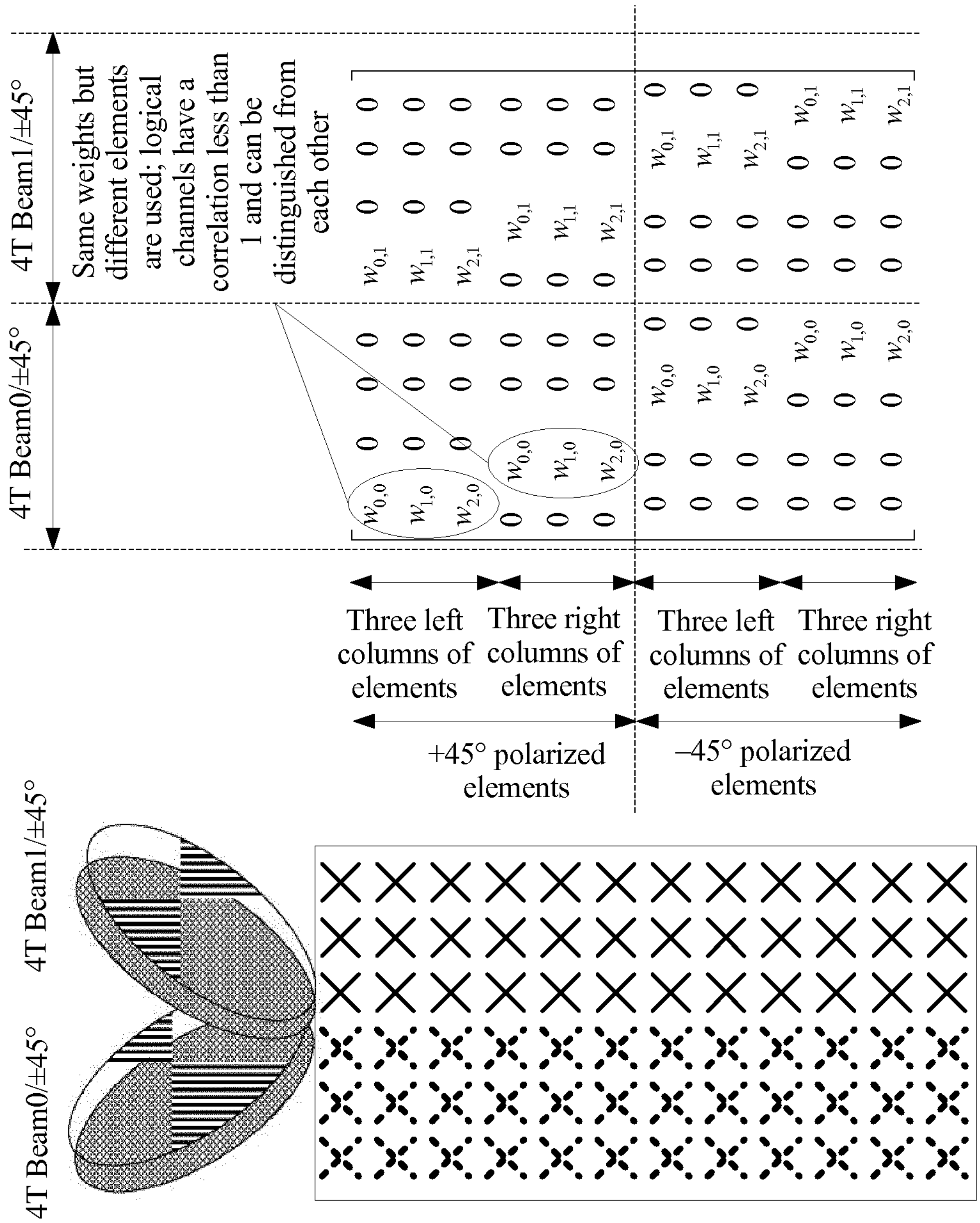
4T Beam1/±45°
4T Beam0/±45°
Same weights but different elements are used; logical channels have a correlation less than 1 and can be distinguished from each other
Three left columns of elements
Three right columns of elements
Three left columns of elements
Three right columns of elements
+45° polarized elements
–45° polarized elements
4T Beam0/±45°
4T Beam1/±45°

FIG. 3

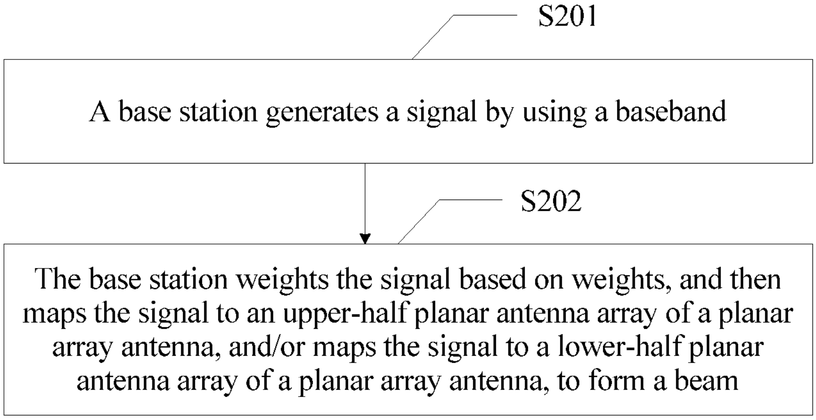
S201
A base station generates a signal by using a baseband
S202
The base station weights the signal based on weights, and then maps the signal to an upper-half planar antenna array of a planar array antenna, and/or maps the signal to a lower-half planar antenna array of a planar array antenna, to form a beam

FIG. 4

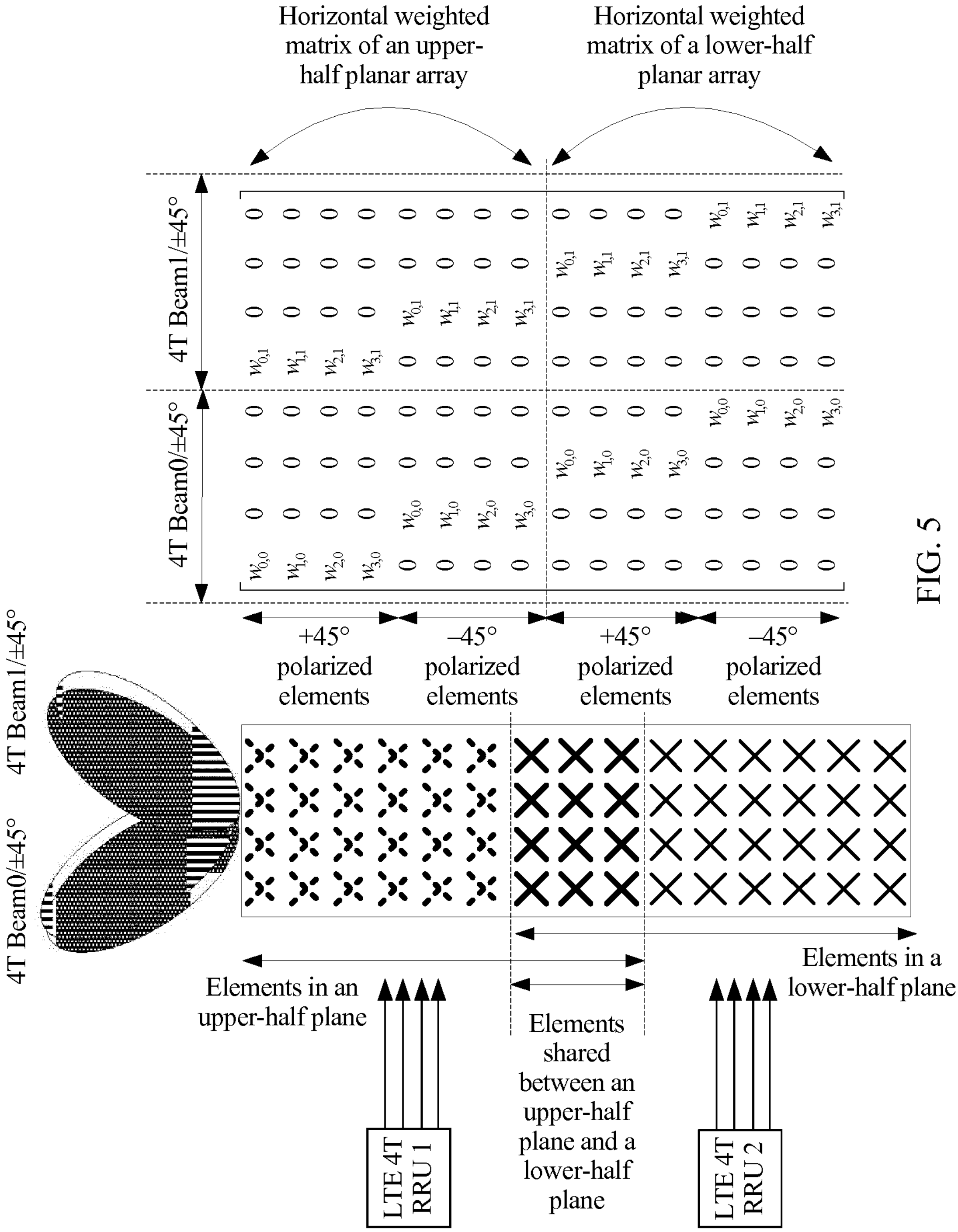
Horizontal weighted matrix of an upper-half planar array
Horizontal weighted matrix of a lower-half planar array
4T Beam1/±45°
4T Beam0/±45°
+45° polarized elements
–45° polarized elements
+45° polarized elements
–45° polarized elements
4T Beam1/±45°
4T Beam0/±45°
Elements in an upper-half plane
Elements shared between an upper-half plane and a lower-half plane
Elements in a lower-half plane
LTE 4T RRU 1
LTE 4T RRU 2

FIG. 5

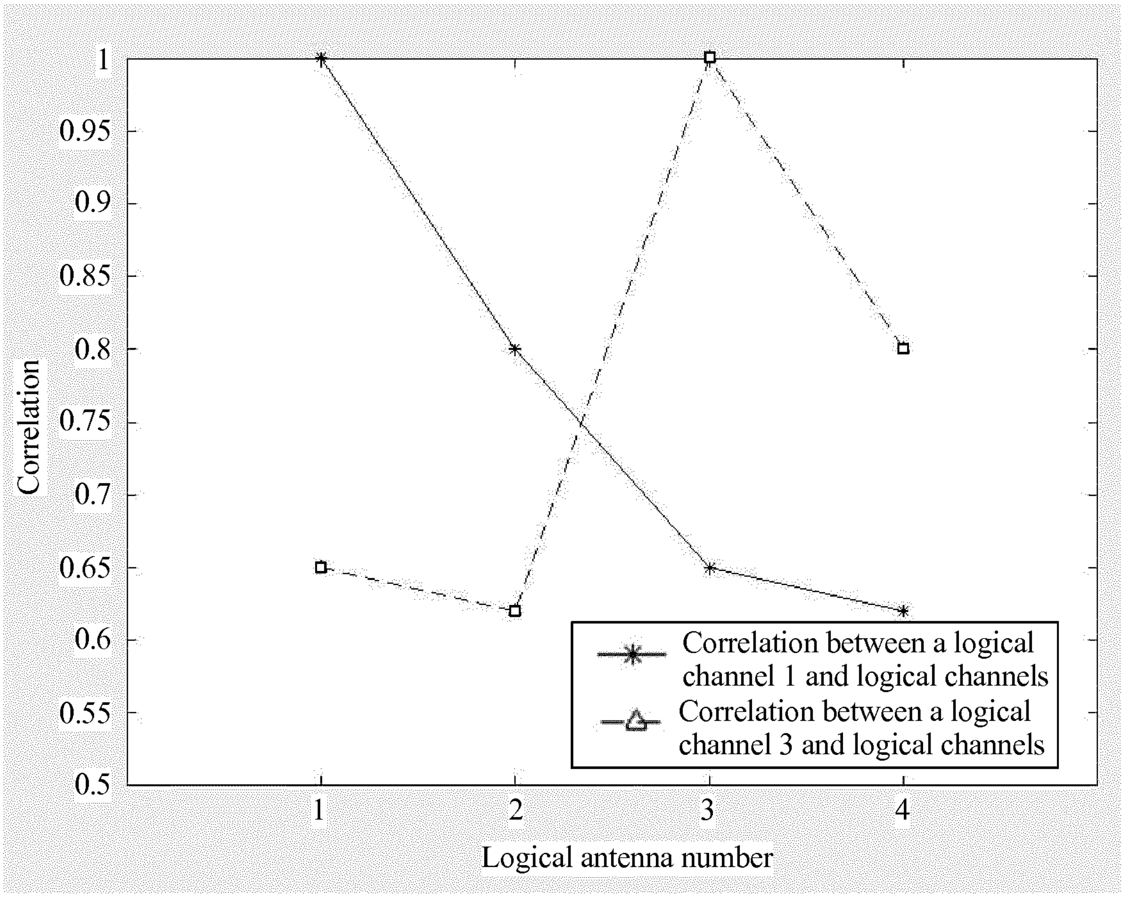
1
0.95
0.9
0.85
0.8
0.75
0.7
0.65
0.6
0.55
0.5
Correlation
1
2
3
4
Logical antenna number
Correlation between a logical channel 1 and logical channels
Correlation between a logical channel 3 and logical channels

FIG. 6

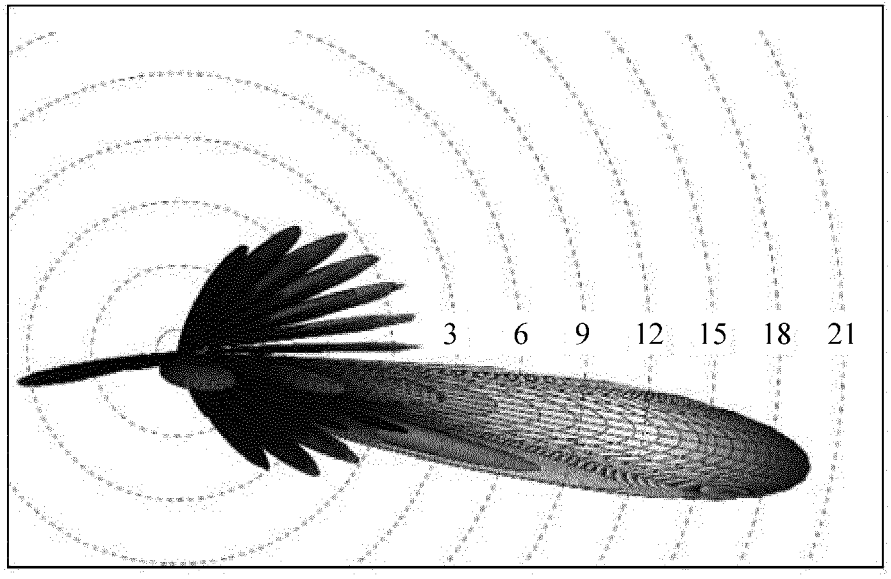


FIG. 7

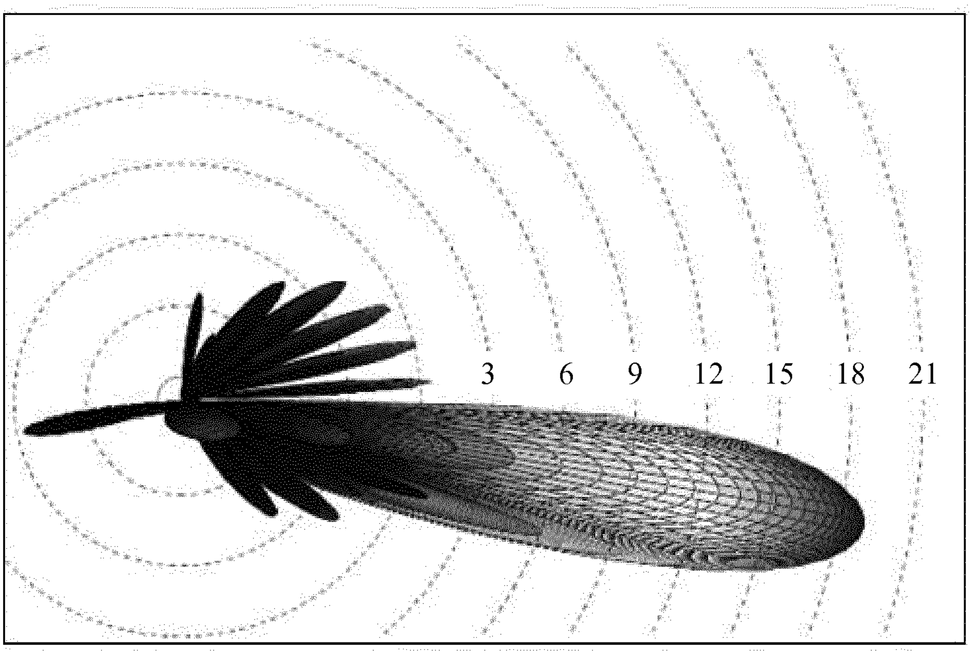


FIG. 8

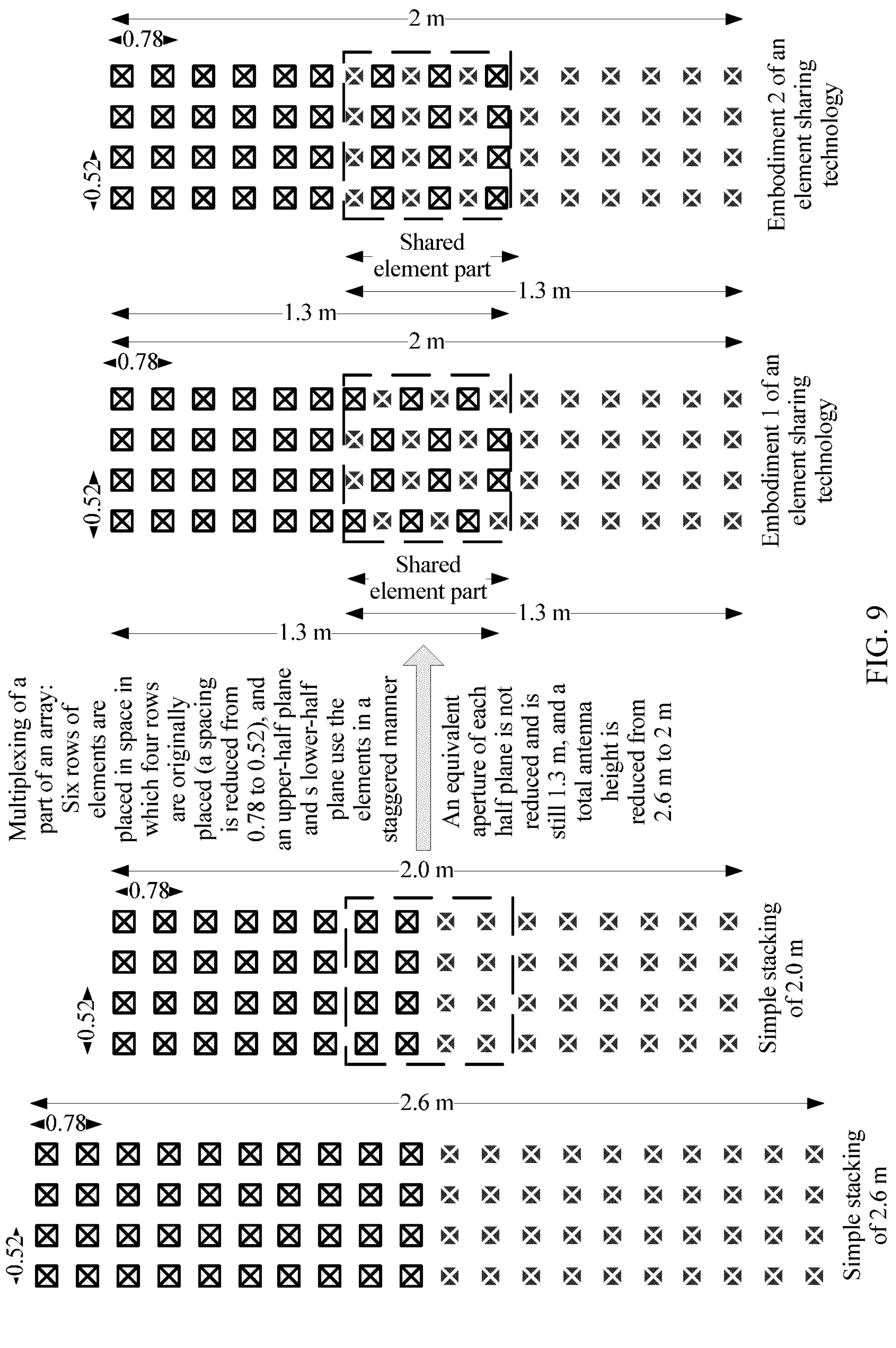
2 m
0.78
0.52
Shared element part
1.3 m
1.3 m
Embodiment 2 of an element sharing technology
2 m
0.78
0.52
Shared element part
1.3 m
1.3 m
Embodiment 1 of an element sharing technology
Multiplexing of a part of an array: Six rows of elements are placed in space in which four rows are originally placed (a spacing is reduced from 0.78 to 0.52), and an upper-half plane and s lower-half plane use the elements in a staggered manner
An equivalent aperture of each half plane is not reduced and is still 1.3 m, and a total antenna height is reduced from 2.6 m to 2 m
2.0 m
0.78
0.52
Simple stacking of 2.0 m
2.6 m
0.78
0.52
Simple stacking of 2.6 m

FIG. 9

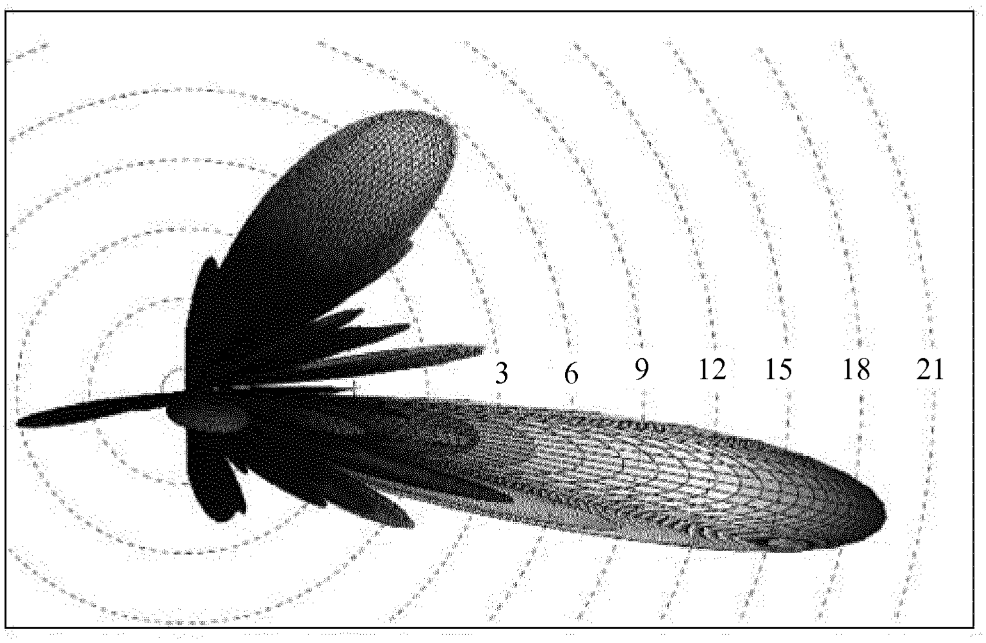


FIG. 10 (Embodiment 1: staggering of rows and columns, and a gain: 18.812 dB)

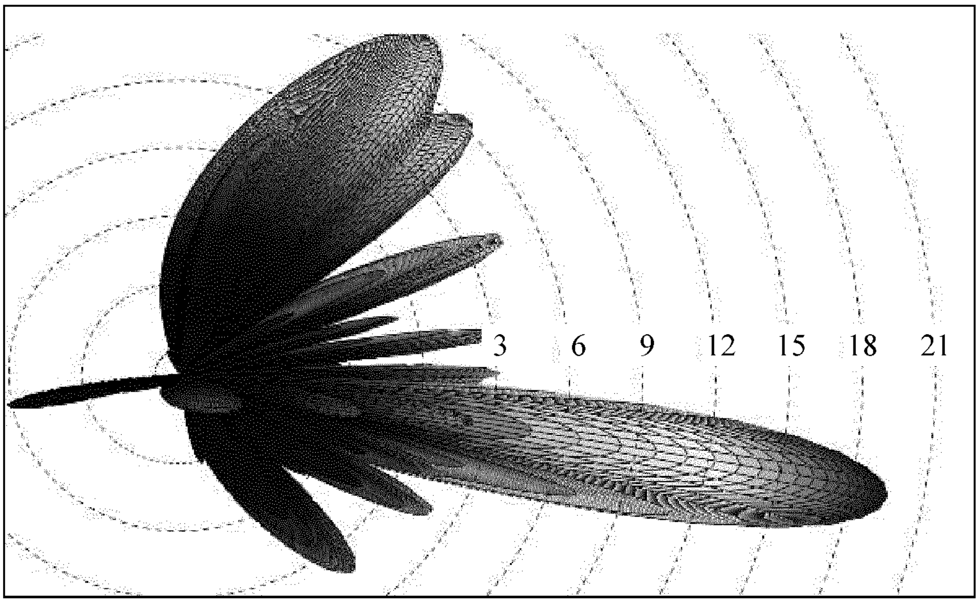


FIG. 11 (Embodiment 2: staggering of rows, and a gain: 18.805 dB)

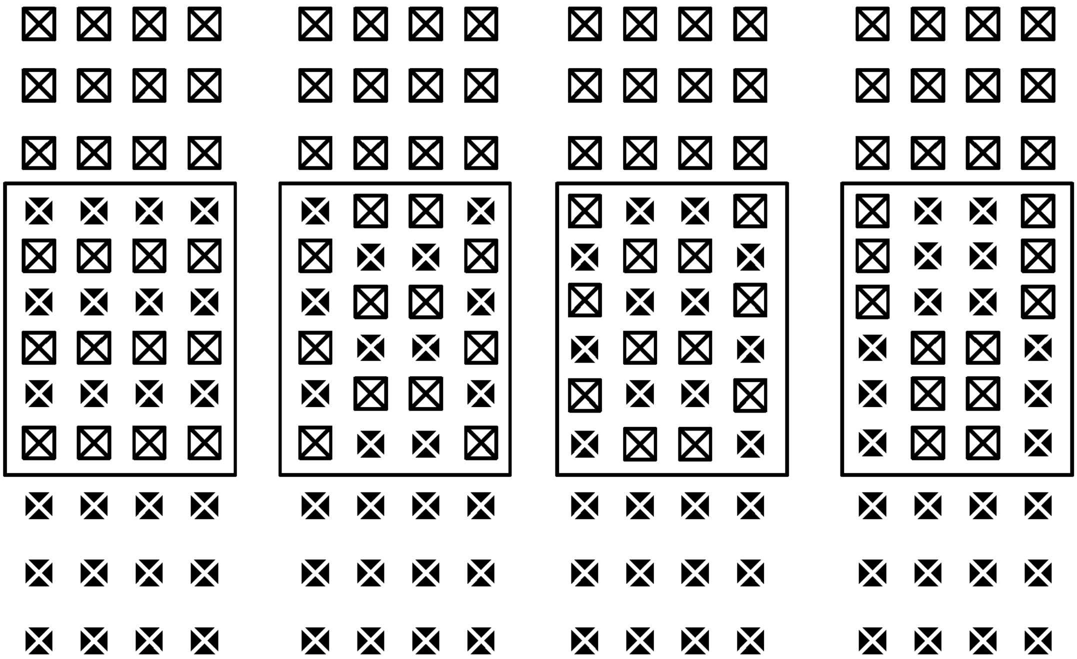

FIG. 12

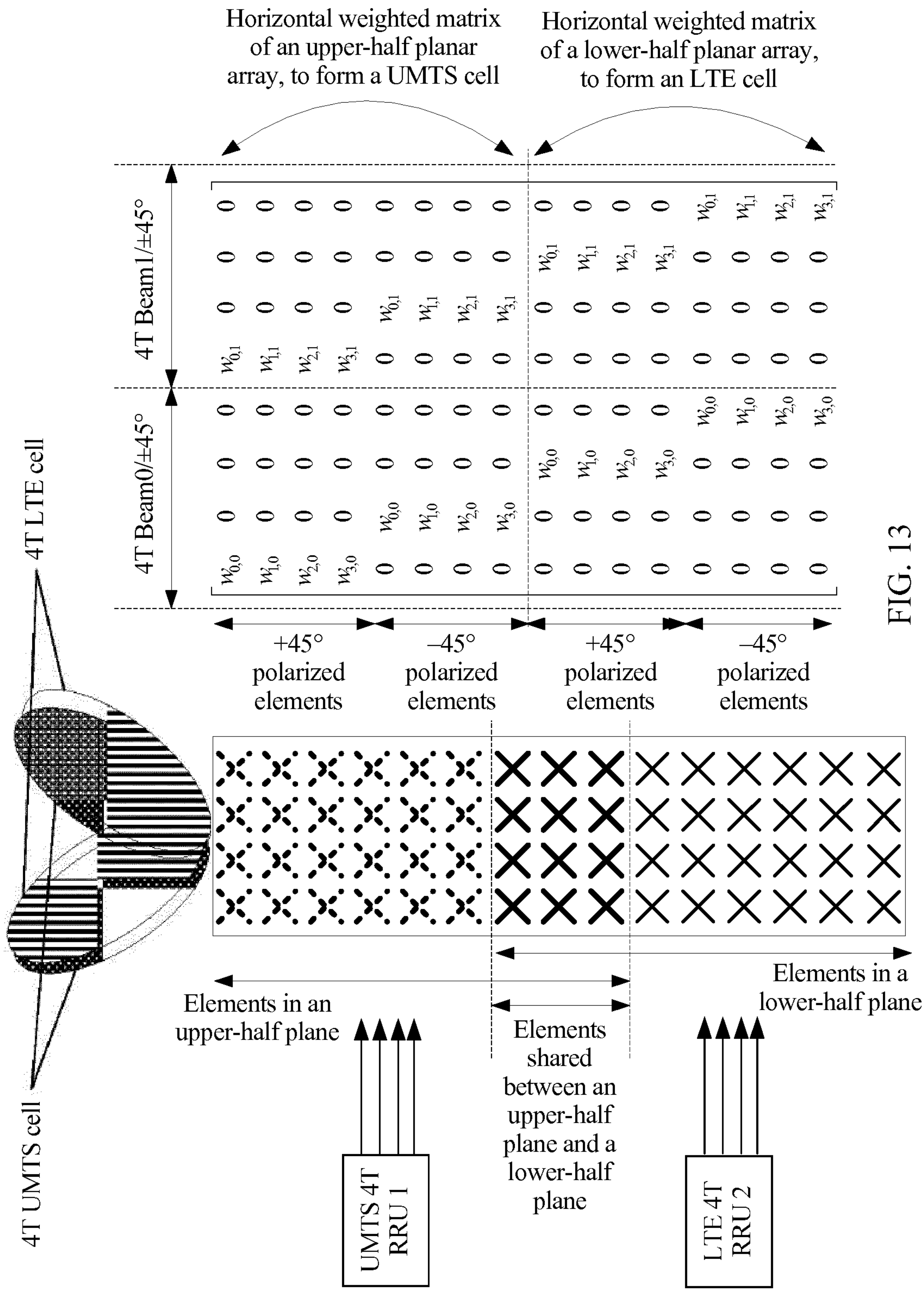
Horizontal weighted matrix of an upper-half planar array, to form a UMTS cell
Horizontal weighted matrix of a lower-half planar array, to form an LTE cell
4T Beam1/±45°
4T Beam0/±45°
4T LTE cell
4T UMTS cell
+45° polarized elements
–45° polarized elements
+45° polarized elements
–45° polarized elements
Elements in an upper-half plane
Elements shared between an upper-half plane and a lower-half plane
Elements in a lower-half plane
UMTS 4T RRU 1
LTE 4T RRU 2

FIG. 13

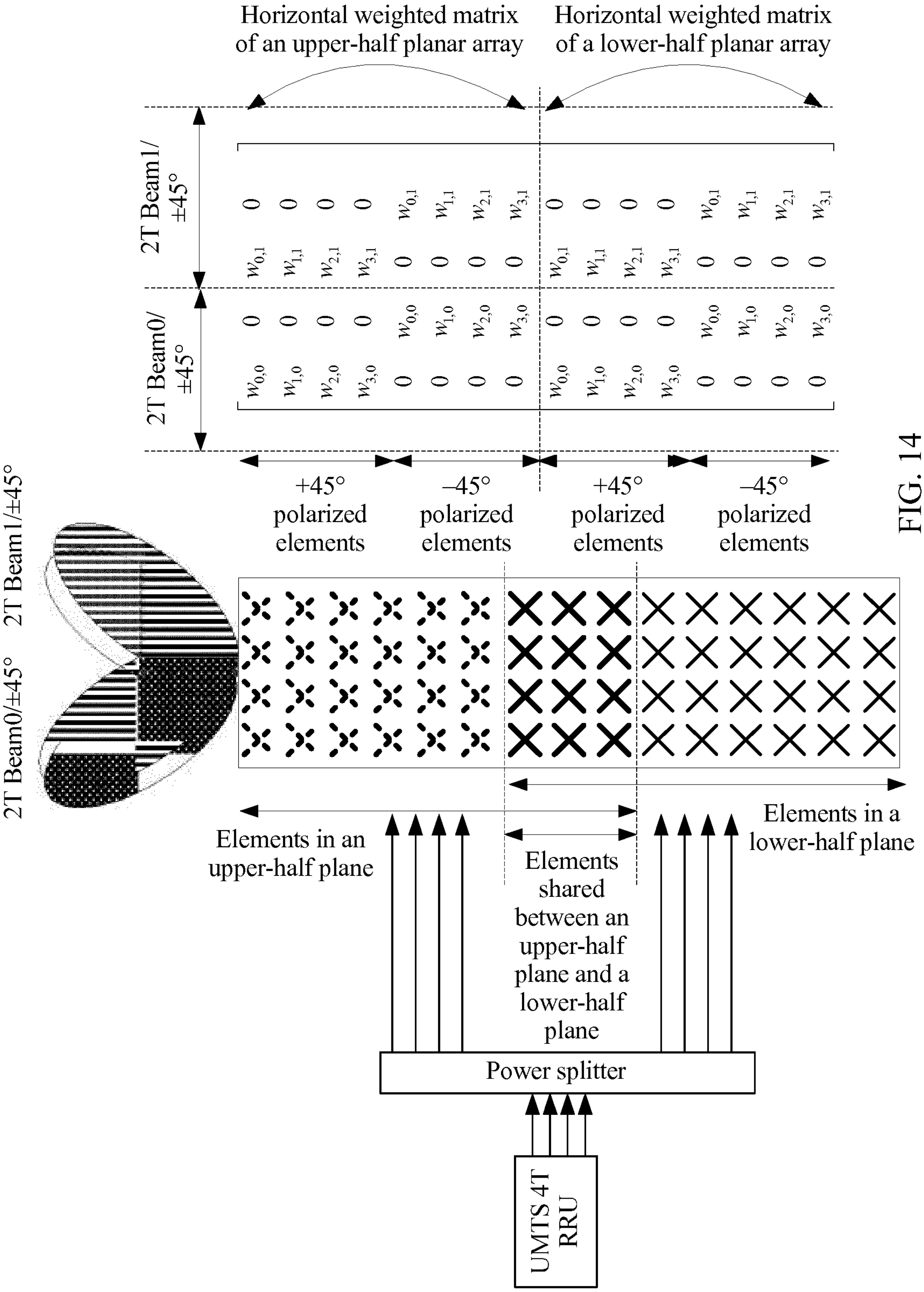
Horizontal weighted matrix of an upper-half planar array
Horizontal weighted matrix of a lower-half planar array
2T Beam1/ ±45°
2T Beam0/ ±45°
+45° polarized elements
–45° polarized elements
+45° polarized elements
–45° polarized elements
2T Beam1/±45°
2T Beam0/±45°
Elements in an upper-half plane
Elements shared between an upper-half plane and a lower-half plane
Elements in a lower-half plane
Power splitter
UMTS 4T RRU

FIG. 14

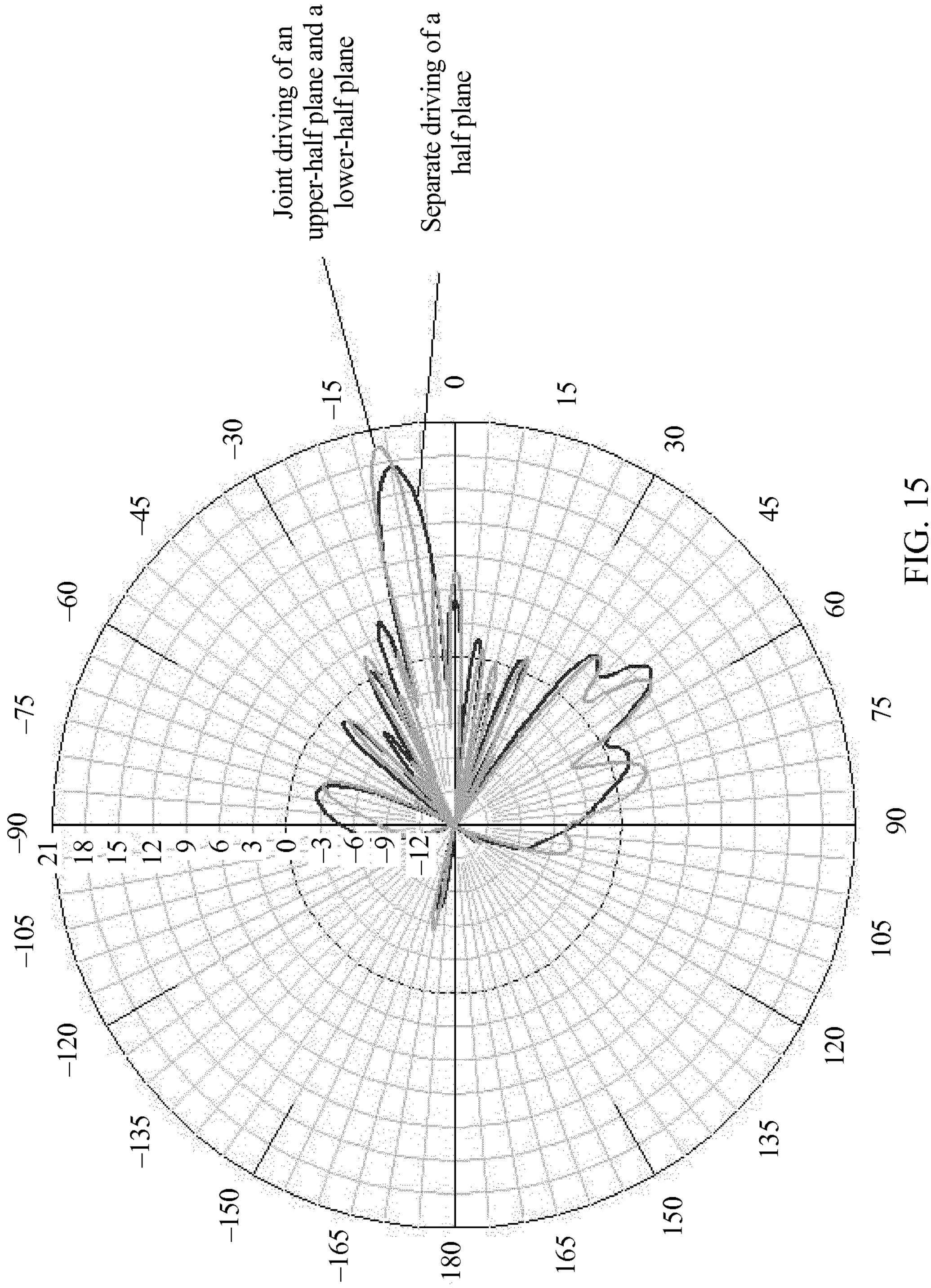
Joint driving of an upper-half plane and a lower-half plane
Separate driving of a half plane
0
15
30
45
60
75
90
105
120
135
150
165
180
−165
−150
−135
−120
−105
−90
−75
−60
−45
−30
−15
21
18
15
12
9
6
3
0
−3
−6
−9
−12

FIG. 15

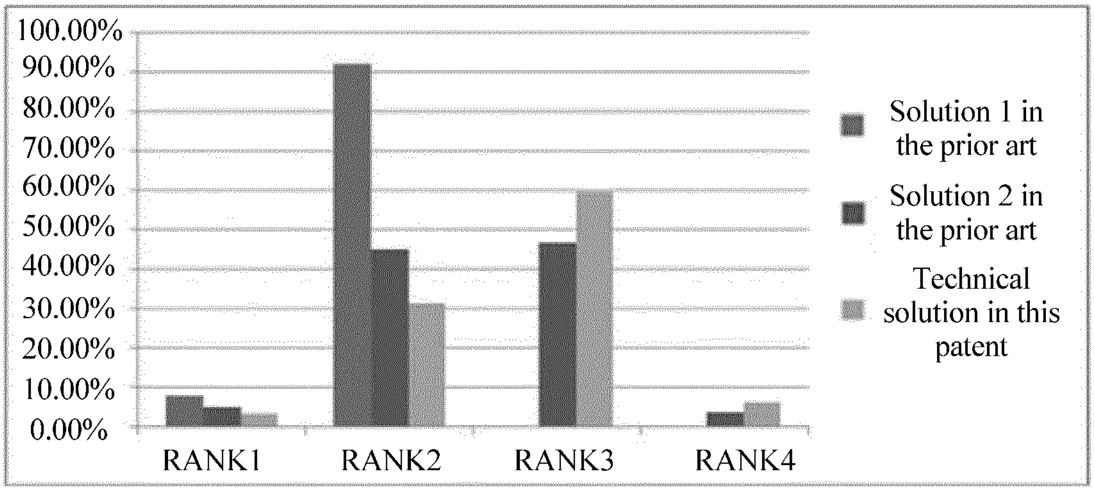
100.00%
90.00%
80.00%
70.00%
60.00%
50.00%
40.00%
30.00%
20.00%
10.00%
0.00%
RANK1
RANK2
RANK3
RANK4
Solution 1 in the prior art
Solution 2 in the prior art
Technical solution in this patent

FIG. 16

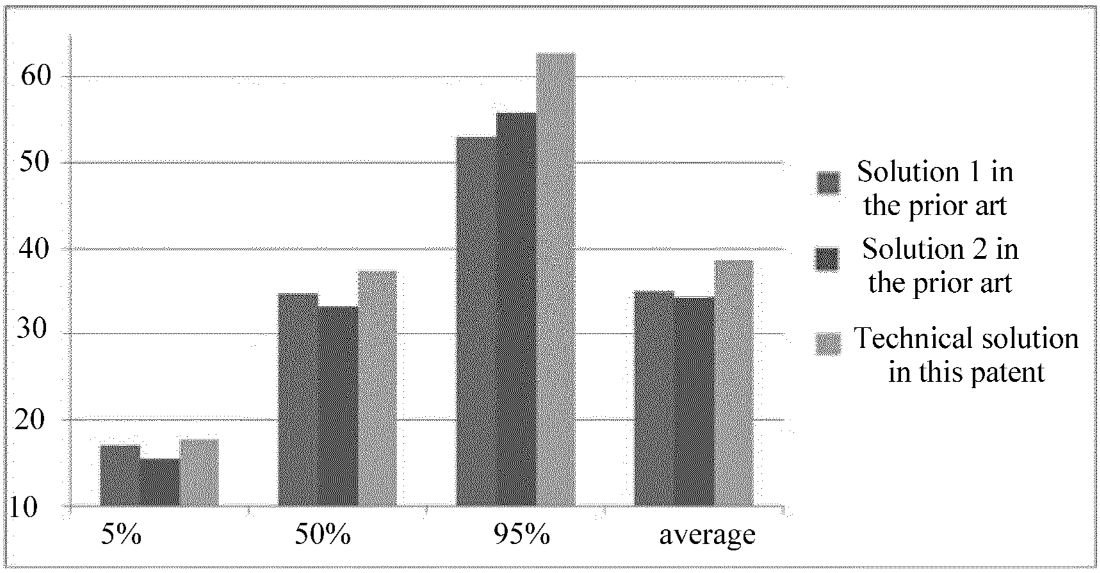
60
50
40
30
20
10
5%
50%
95%
average
Solution 1 in the prior art
Solution 2 in the prior art
Technical solution in this patent

FIG. 17

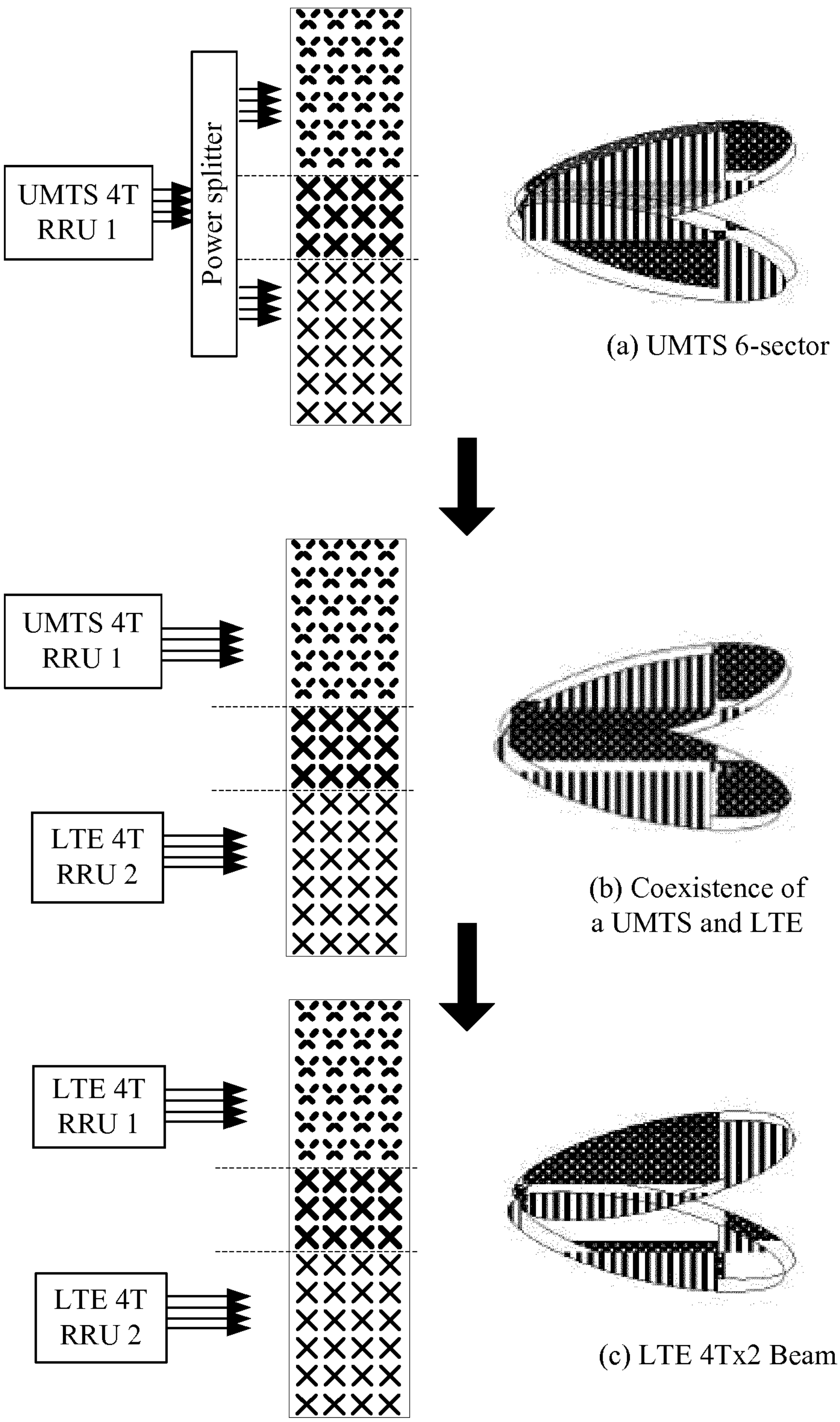
UMTS 4T
RRU 1
Power splitter
(a) UMTS 6-sector
UMTS 4T
RRU 1
LTE 4T
RRU 2
(b) Coexistence of
a UMTS and LTE
LTE 4T
RRU 1
LTE 4T
RRU 2
(c) LTE 4Tx2 Beam

FIG. 18

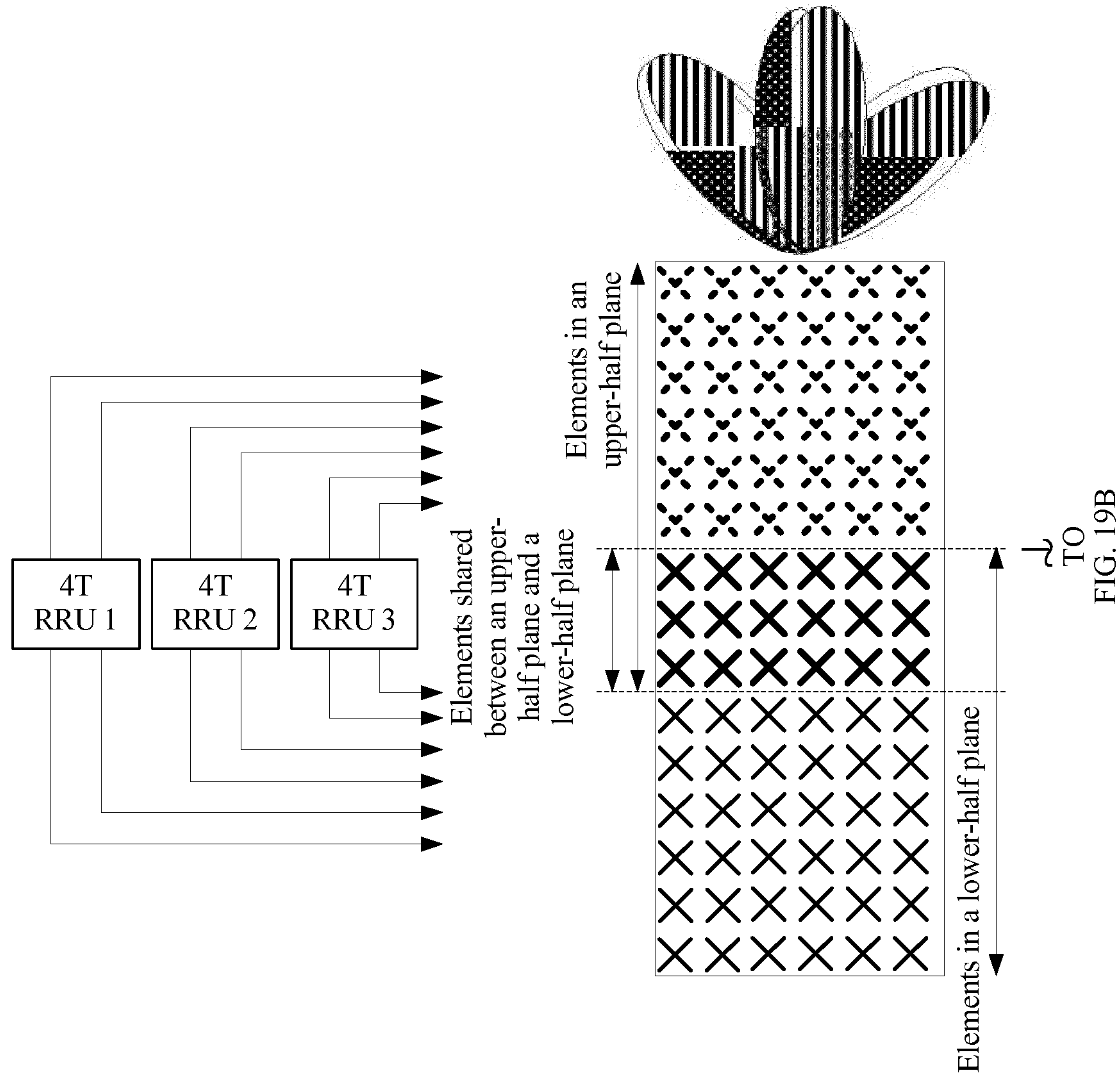
4T
RRU 1
4T
RRU 2
4T
RRU 3
Elements shared between an upper-half plane and a lower-half plane
Elements in an upper-half plane
Elements in a lower-half plane
TO
FIG. 19B

FIG. 19A

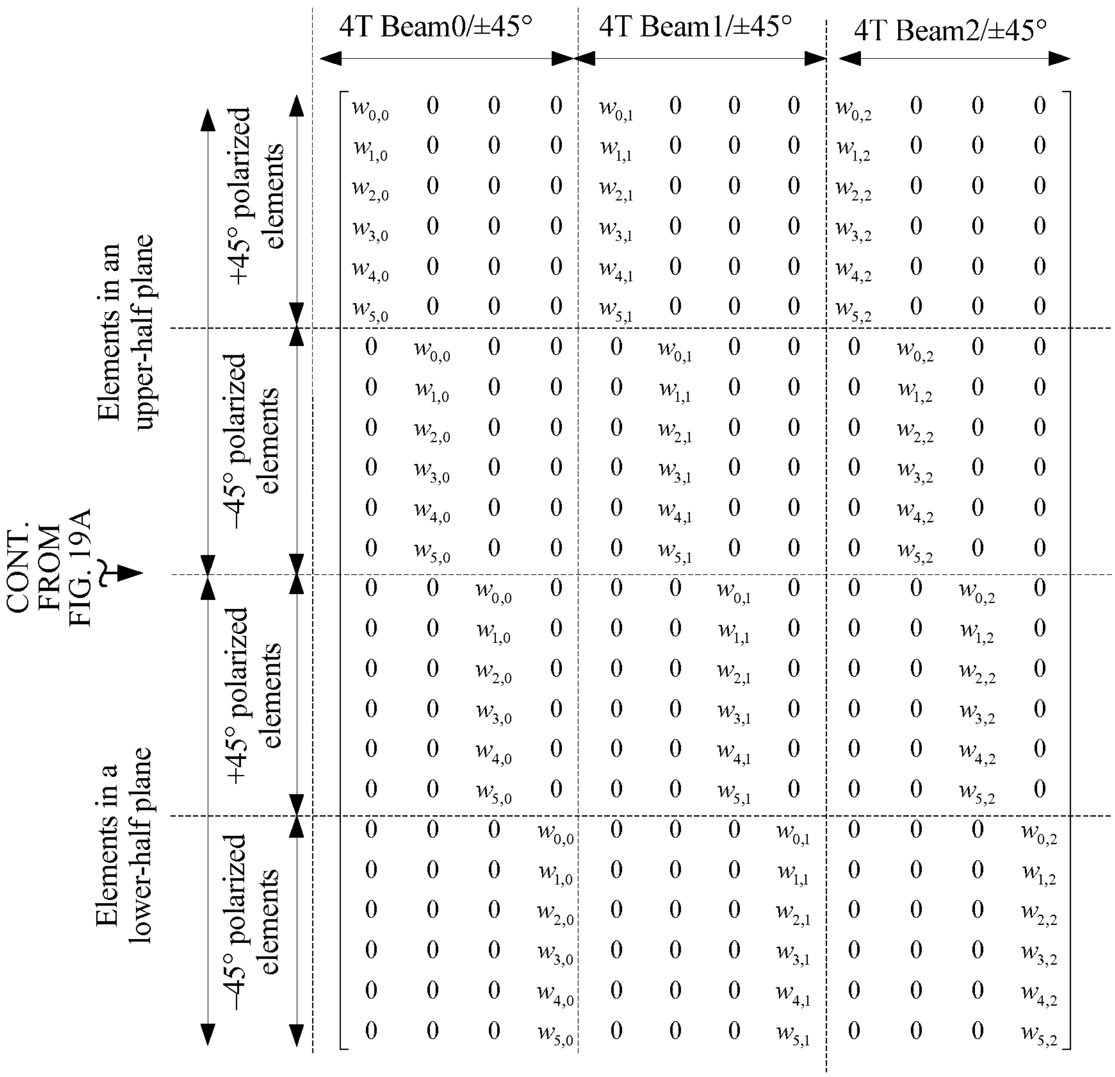
4T Beam0/±45°
4T Beam1/±45°
4T Beam2/±45°
Elements in an upper-half plane
+45° polarized elements
−45° polarized elements
Elements in a lower-half plane
+45° polarized elements
−45° polarized elements
CONT. FROM FIG. 19A

FIG. 19B

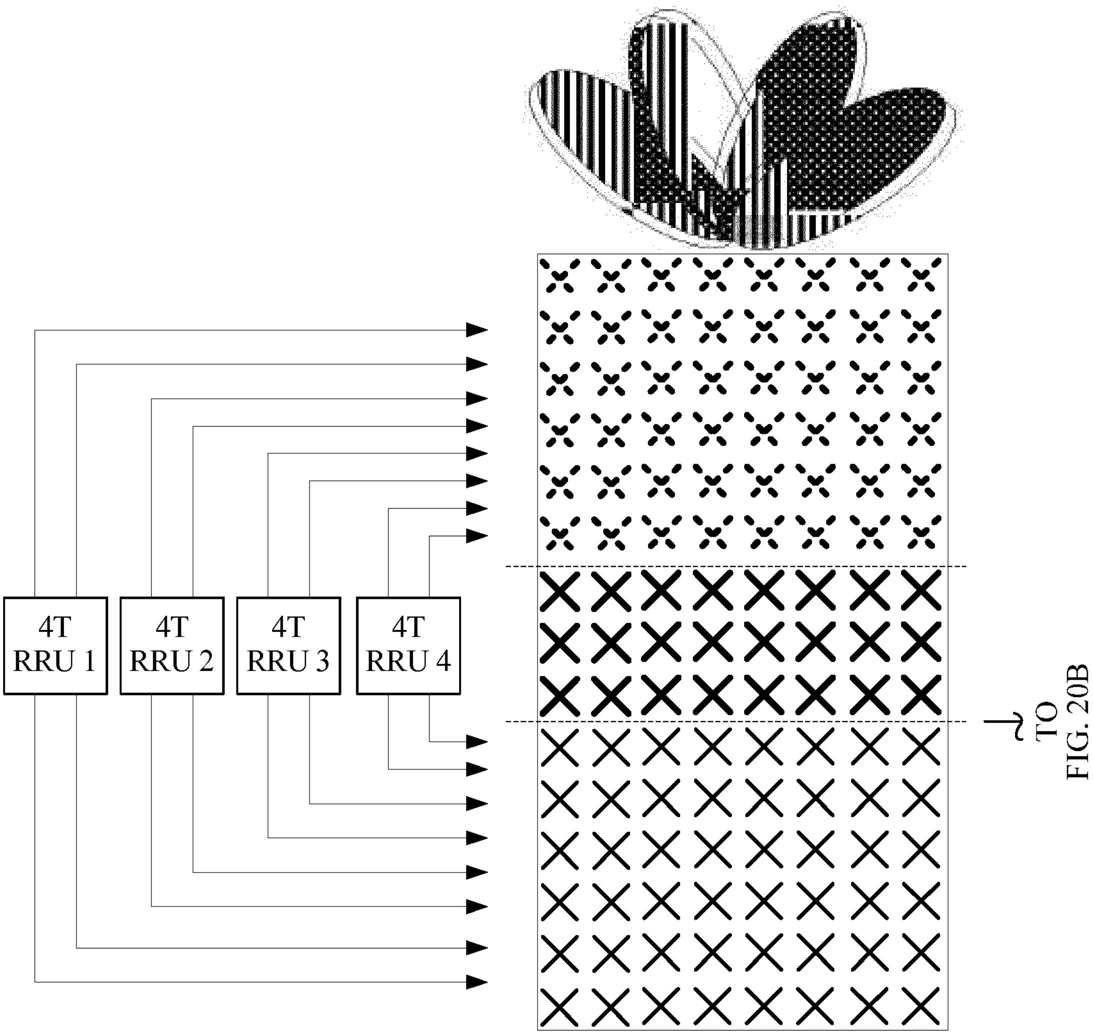


FIG. 20A

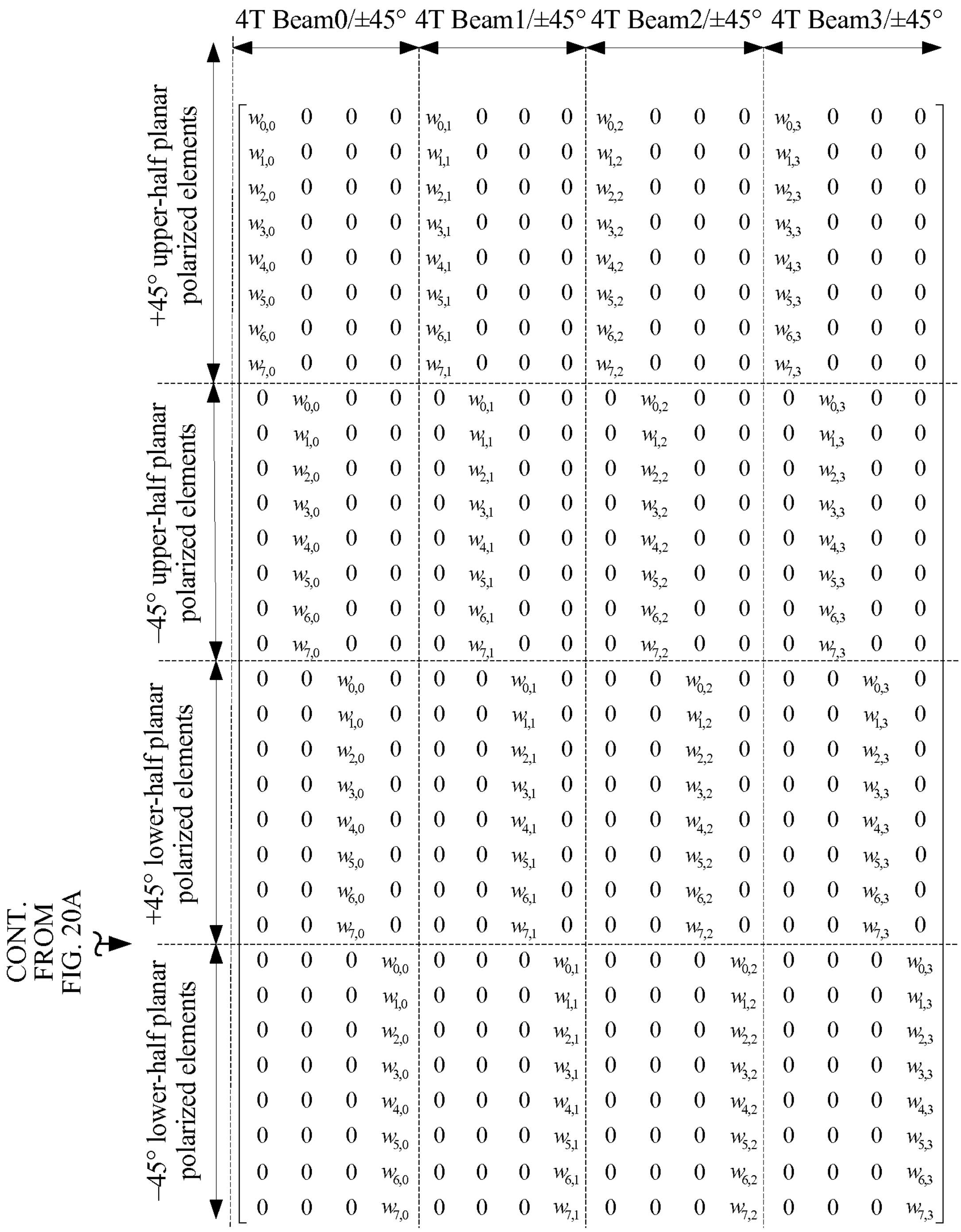


$$\begin{bmatrix}
w_{0,0}&0&0&0&w_{0,1}&0&0&0&w_{0,2}&0&0&0&w_{0,3}&0&0&0\\
w_{1,0}&0&0&0&w_{1,1}&0&0&0&w_{1,2}&0&0&0&w_{1,3}&0&0&0\\
w_{2,0}&0&0&0&w_{2,1}&0&0&0&w_{2,2}&0&0&0&w_{2,3}&0&0&0\\
w_{3,0}&0&0&0&w_{3,1}&0&0&0&w_{3,2}&0&0&0&w_{3,3}&0&0&0\\
w_{4,0}&0&0&0&w_{4,1}&0&0&0&w_{4,2}&0&0&0&w_{4,3}&0&0&0\\
w_{5,0}&0&0&0&w_{5,1}&0&0&0&w_{5,2}&0&0&0&w_{5,3}&0&0&0\\
w_{6,0}&0&0&0&w_{6,1}&0&0&0&w_{6,2}&0&0&0&w_{6,3}&0&0&0\\
w_{7,0}&0&0&0&w_{7,1}&0&0&0&w_{7,2}&0&0&0&w_{7,3}&0&0&0\\
0&w_{0,0}&0&0&0&w_{0,1}&0&0&0&w_{0,2}&0&0&0&w_{0,3}&0&0\\
0&w_{1,0}&0&0&0&w_{1,1}&0&0&0&w_{1,2}&0&0&0&w_{1,3}&0&0\\
0&w_{2,0}&0&0&0&w_{2,1}&0&0&0&w_{2,2}&0&0&0&w_{2,3}&0&0\\
0&w_{3,0}&0&0&0&w_{3,1}&0&0&0&w_{3,2}&0&0&0&w_{3,3}&0&0\\
0&w_{4,0}&0&0&0&w_{4,1}&0&0&0&w_{4,2}&0&0&0&w_{4,3}&0&0\\
0&w_{5,0}&0&0&0&w_{5,1}&0&0&0&w_{5,2}&0&0&0&w_{5,3}&0&0\\
0&w_{6,0}&0&0&0&w_{6,1}&0&0&0&w_{6,2}&0&0&0&w_{6,3}&0&0\\
0&w_{7,0}&0&0&0&w_{7,1}&0&0&0&w_{7,2}&0&0&0&w_{7,3}&0&0\\
0&0&w_{0,0}&0&0&0&w_{0,1}&0&0&0&w_{0,2}&0&0&0&w_{0,3}&0\\
0&0&w_{1,0}&0&0&0&w_{1,1}&0&0&0&w_{1,2}&0&0&0&w_{1,3}&0\\
0&0&w_{2,0}&0&0&0&w_{2,1}&0&0&0&w_{2,2}&0&0&0&w_{2,3}&0\\
0&0&w_{3,0}&0&0&0&w_{3,1}&0&0&0&w_{3,2}&0&0&0&w_{3,3}&0\\
0&0&w_{4,0}&0&0&0&w_{4,1}&0&0&0&w_{4,2}&0&0&0&w_{4,3}&0\\
0&0&w_{5,0}&0&0&0&w_{5,1}&0&0&0&w_{5,2}&0&0&0&w_{5,3}&0\\
0&0&w_{6,0}&0&0&0&w_{6,1}&0&0&0&w_{6,2}&0&0&0&w_{6,3}&0\\
0&0&w_{7,0}&0&0&0&w_{7,1}&0&0&0&w_{7,2}&0&0&0&w_{7,3}&0\\
0&0&0&w_{0,0}&0&0&0&w_{0,1}&0&0&0&w_{0,2}&0&0&0&w_{0,3}\\
0&0&0&w_{1,0}&0&0&0&w_{1,1}&0&0&0&w_{1,2}&0&0&0&w_{1,3}\\
0&0&0&w_{2,0}&0&0&0&w_{2,1}&0&0&0&w_{2,2}&0&0&0&w_{2,3}\\
0&0&0&w_{3,0}&0&0&0&w_{3,1}&0&0&0&w_{3,2}&0&0&0&w_{3,3}\\
0&0&0&w_{4,0}&0&0&0&w_{4,1}&0&0&0&w_{4,2}&0&0&0&w_{4,3}\\
0&0&0&w_{5,0}&0&0&0&w_{5,1}&0&0&0&w_{5,2}&0&0&0&w_{5,3}\\
0&0&0&w_{6,0}&0&0&0&w_{6,1}&0&0&0&w_{6,2}&0&0&0&w_{6,3}\\
0&0&0&w_{7,0}&0&0&0&w_{7,1}&0&0&0&w_{7,2}&0&0&0&w_{7,3}
\end{bmatrix}$$

FIG. 20B

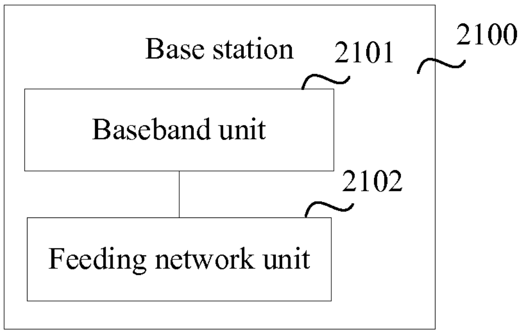
Base station
2100
2101
Baseband unit
2102
Feeding network unit

FIG. 21

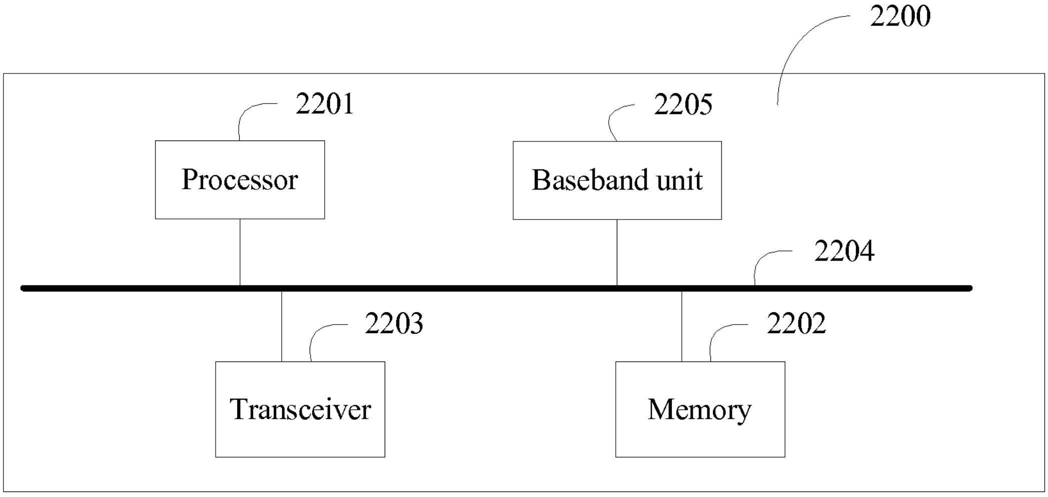
2200
2201
2205
Processor
Baseband unit
2204
2203
2202
Transceiver
Memory

FIG. 22

# INTERNATIONAL SEARCH REPORT

International application No. PCT/CN2017/072650

**A. CLASSIFICATION OF SUBJECT MATTER**

H04B 1/40 (2015.01) i; H04B 7/04 (2017.01) i

According to International Patent Classification (IPC) or to both national classification and IPC

B. FIELDS SEARCHED

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 基站, 基带, 天线, 阵列, 波束, 矩形, 平面, 共用, 射频拉远单元, 映射; BS, baseband, BBU, antenna, array, beam, form, rectangle, plane, common, RRU, radio, mapping

C. DOCUMENTS CONSIDERED TO BE RELEVANT

| Category* | Citation of document, with indication, where appropriate, of the relevant passages | Relevant to claim No. |
|---|---|---|
| A | CN 106160776 A (BEIJING XINWEI TELECOM TECHNOLOGY INC.), 23 November 2016 (23.11.2016), description, paragraphs 0020-0040 | 1-18 |
| A | CN 102223213 A (CHINA MOBILE COMMUNICATIONS CORPORATION), 19 October 2011 (19.10.2011), entire document | 1-18 |
| A | CN 103873123 A (CHINA MOBILE GROUP BEIJING CO., LTD.), 18 June 2014 (18.06.2014), entire document | 1-18 |
| A | WO 2014027057 A1 (NOKIA SIEMENS NETWORKS OY), 20 February 2014 (20.02.2014), entire document entire document | 1-18 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 30 September 2017 | 20 October 2017 |
| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br>PENG, Liang<br>Telephone No. (86-10) 62413350 |

Form PCT/ISA/210 (second sheet) (July 2009)

## INTERNATIONAL SEARCH REPORT
Information on patent family members

International application No.
PCT/CN2017/072650

| Patent Documents referred in the Report | Publication Date | Patent Family | Publication Date |
|---|---|---|---|
| CN 106160776 A | 23 November 2016 | None | |
| CN 102223213 A | 19 October 2011 | None | |
| CN 103873123 A | 18 June 2014 | None | |
| WO 2014027057 A1 | 20 February 2014 | US 8619894 B1 | 31 December 2013 |

Form PCT/ISA/210 (patent family annex) (July 2009)